(19) **Europäisches Patentamt / European Patent Office / Office européen des brevets**

(11) **EP 2 381 690 A1**

(12) **EUROPEAN PATENT APPLICATION**
published in accordance with Art. 153(4) EPC

(43) Date of publication:
26.10.2011 Bulletin 2011/43

(21) Application number: 10831411.3

(22) Date of filing: 18.10.2010

(51) Int Cl.:
*H04N 13/00* (2006.01)    *H04N 7/173* (2011.01)
*H04N 7/26* (2006.01)

(86) International application number:
PCT/JP2010/068243

(87) International publication number:
WO 2011/062015 (26.05.2011 Gazette 2011/21)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 17.11.2009 JP 2009262185

(71) Applicant: Sony Corporation
Tokyo 108-0075 (JP)

(72) Inventor: NAGANO, Hidetoshi
Tokyo 108-0075 (JP)

(74) Representative: Haines, Miles John L.S. et al
D Young & Co LLP
120 Holborn
London EC1N 2DY (GB)

(54) **IMAGE TRANSMISSION METHOD, IMAGE RECEPTION METHOD, IMAGE TRANSMISSION DEVICE, IMAGE RECEPTION DEVICE, AND IMAGE TRANSMISSION SYSTEM**

(57)    Provided is an image transmission apparatus. The transmission apparatus includes a compression units configured to compress an integrated image in which a normal viewing moving image and an additional information moving image are arranged on one frame, an area information encoding unit configured to encode information representing an area of the normal viewing moving image, a presence information encoding units configured to encode presence information representing that the additional information moving image is present, and a Transmission unit configured to transmit the encoded integrated image, the encoded area information, and the encoded presence information.

FIG.22

EP 2 381 690 A1

**Description**

Technical Field

The present invention relates to an image transmission method, an image reception method, an image transmission apparatus, an image reception apparatus, and an image transmission system.

Background Art

In the for example, as described in the following Patent Literatures, a technique of alternately supplying a display with a left-eye image and a right-eye image, which have a parallax therebetween, at a predetermined cycle and observing the image with glasses with a synchronized liquid crystal shutter that is driven at a predetermined cycle has been known.

in current digital broadcasting, services such as an electronic program table or data broadcasting are being operated, and services other than normal video or voice programs are starting to be provided according to users' desire.

Citation List - Patent Literature

Patent Literature 1: JP 9-138384A
Patent Literature 2: JP 2000-36969A
Patent Literature 3: JP 2003-45343A

Summary of Invention

Technical Problem

In these circumstances, a normal program has also been requested to further enrich a service by adding new value to a video and a voice. In order to add new value to a video, it is conceivable to transmit a video having an added value (hereinafter, referred to as an "additional information moving image") separately from a normal video (hereinafter, referred to as a "normal viewing moving image") and display a moving image with a high added value using the normal viewing moving image and the additional information moving image at a reception side.

In order to transmit the additional information moving image for improving the added value of the contents together with the normal viewing moving image created for normal viewing, a technique of separately encoding and transmitting the normal viewing moving image and the additional information moving image, separately decoding the transmitted moving image, and displaying the moving image may be used. In this case, however, a reception apparatus side has to perform decoding twice, and if two are mounted, the price of a reception apparatus increases.

if if the normal Viewing moving and the additional information moving images are on a single screen, the normal viewing moving image and the additional information moving image are together, encoding can be performed by a single encoder, and the normal viewing moving images and the additional information moving image are decoded by a single decoder. However, the normal viewing moving and the additional information moving image are constantly displayed as output of the reception apparatus, leading to a display different from the normal viewing moving image originally intended by the transmission side.

For example, a binocular stereoscopic moving image may be transmitted as a video with an added value higher than a normal video. In this case, it may be considered that one monocular image is regarded as the normal viewing moving image, the other monocular moving image is transmitted as the additional information moving image.

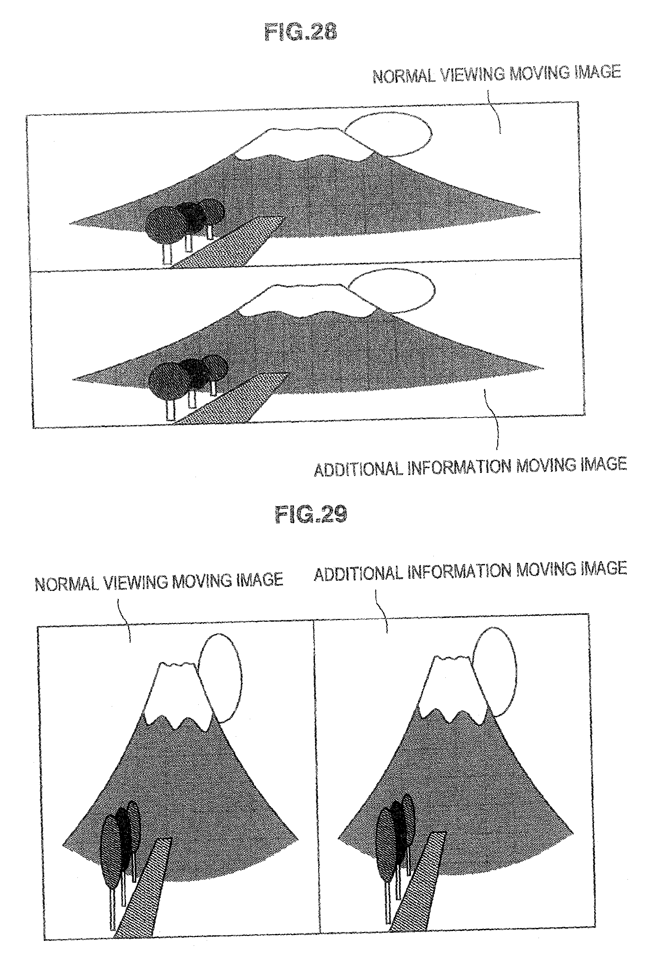

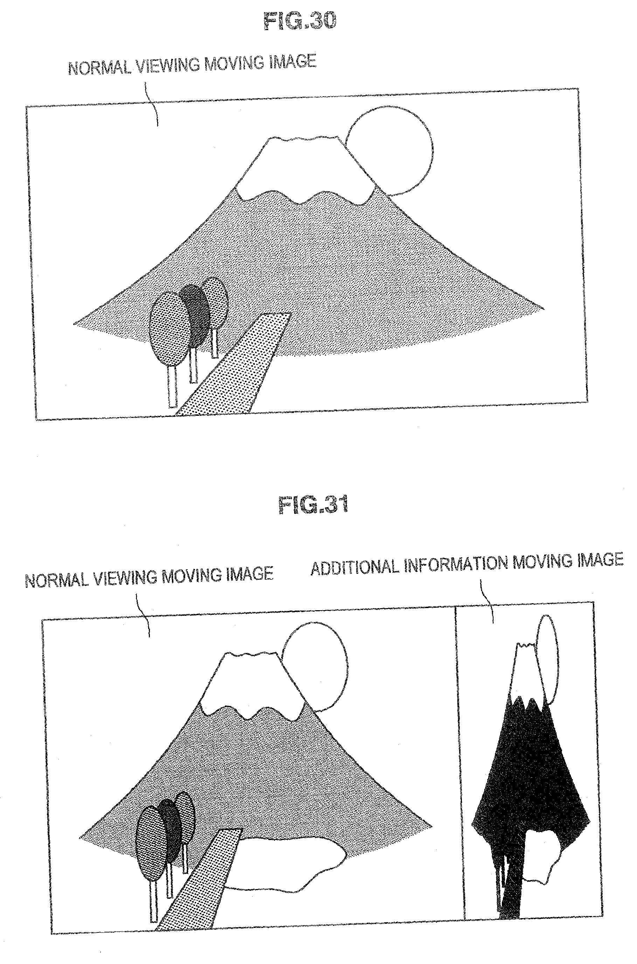

As a result, in a conventional reception apparatus that cannot implement binocular stereoscopic vision, as illustrated in Figs. 28 and 29, the normal viewing moving image and the additional information moving image are contracted on the same screen in a vertical direction or a horizontal direction and then collaterally displayed at the same time. Since the binocular stereoscopic vision is small in the content difference between left and right moving images, in the reception apparatus that cannot implement the binocular stereoscopic vision, it is desirable to view only the monocular moving image (the normal viewing moving image) at a correct aspect ratio as illustrated in Fig. 30 rather than Figs. 28 and 29.

Therefore, the present invention is made in light of the above problems, and it is an object of the present invention to provide an image transmission method, an image reception method, an image transmission apparatus, an image reception apparatus, and an image transmission system which are novel and improved, and which are capable of minimizing a change in the existing transmission/reception apparatus in moving image transmission and transmitting the additional information moving image together with the normal viewing moving image.

Solution to Problem

According to an aspect of the present invention in order to achieve the above-mentioned object, there is provided an image transmission method including the steps of compressing an integrated image in which a normal viewing moving image and an additional information moving image are arranged on one frame, encoding area information representing an area of the normal viewing moving image, encoding presence information representing that the additional information moving image is present, and transmitting the integrated image, the area information, and the presence information.

The presence information may includes information designating a type of the additional information moving image.

information designating, as the of the additional information moving image, whether or not the additional information moving images is a Moving image for multinocular stereoscopic vision may be included.

The presence information may include information representing an of the additional information moving image or an aspect ratio of the additional information moving image.

Presence information may includes information designating an image of the normal viewing moving image at the or using the additional information moving image.

According to another aspect of the present invention in order to achieve the above-mentioned object, there is provided an image reception method including the steps of decompressing an integrated image, in which a normal viewing Moving image and an additional information moving image are arranged on one frame, transmitted from a transmission side, decoding area information representing an area of the normal viewing moving image transmitted from the transmission side together with the integrated image, decoding presence information representing that the additional information moving image transmitted from the transmission side together with the integrated image is present, designating and displaying an area of the normal viewing moving image based on the area information, and recognizing presence of the additional information moving image based on the presence information and displaying the additional information moving image.

According to still another aspect of the present invention in order to achieve the above-mentioned object, there is provided an image transmission apparatus including a compression unit configured to compress an integrated image in which a normal viewing moving image and an additional information moving image are arranged on one frame, an area information encoding unit configured to encode area information representing an area of the normal viewing moving image, a presence information encoding unit configured to encode presence information representing that the additional information moving image is present, and a transmission unit configured to transmit the encoded integrated image, the encoded area information, and the encoded presence information.

According to yet another aspect of the present invention in order to achieve the above-mentioned object, there is provided an image reception apparatus including a decompression unit configured to decompress an integrated image, in which a normal viewing moving image and an additional information moving image are arranged on one frame, transmitted from a transmission side, an area information decoding unit configured to decode area information representing an area of the normal viewing moving image transmitted from the transmission side together with the integrated image, a presence information decoding unit configured to decode presence information representing that the additional information moving image transmitted from the transmission side together with the integrated image is present, and an image output unit configured to designate and output an area of the normal viewing moving image based on the area information, recognize presence of the additional information moving image on the information, and output the additional information, moving image.

According to yet another aspect of the invention in order to the above-mentioned object, there is provided an image transmission system inducting an images transmission that includes a compression unit configured to compress an integrated image in which a normal viewing moving image and an additional information moving image are own one frame, an information encoding unit configured to arena information representing an of the normal viewing moving image, a information encoding unit configured to encode presence information representing that the additional information moving image is present, and a transmission unit configured to transmit the encoded integrated image, the encoded area information, and the encoded presence information, and an image reception apparatus that includes a decompression unit configured to decompress an integrated image, in which a viewing moving image and an additional information moving image are arranged on one frame, transmitted from a transmission side, an area information decoding unit configured to decode area information representing an area of the normal viewing moving image transmitted from the transmission side together with the integrated image, a presence information decoding unit configured to decode presence information representing that the additional information moving image transmitted from the transmission side together with the integrated image is present, and an image output unit configured to designate and output an area of the normal viewing moving image based on the area information, recognize presence of the additional information moving image based on the presence information, and output the additional information moving image.

Advantageous Effects of Invention

According to the present invention, it is possible to minimize a change in the existing transmission/reception apparatus in moving image transmission and transmit the additional information moving image together with the normal viewing moving image.

Brief Description of Drawings

Fig. 1 is a schematic diagram illustrating a status in which a normal viewing moving image and an additional information moving image are displayed on one screen.

Fig. 2 is a schematic diagram illustrating a state in which arrangement information of Fig. 1 is represented as a table.

Fig. 3 is a schematic diagram illustrating a cropping parameter and a parameter related to a rectangular area of an area to be cropped.

Fig. 4 is a schematic diagram illustrating stream information of Dolby AC-3 audio.

Fig. 5 is a schematic diagram illustrating a case in which an additional information moving image descriptor is added to stream information of a PMT.

Fig. 6 is a diagram illustrating an example of the contents of an additional information moving image descriptor.

Figs 7 is a diagram illustrating a layer of additional information moving images SEI.

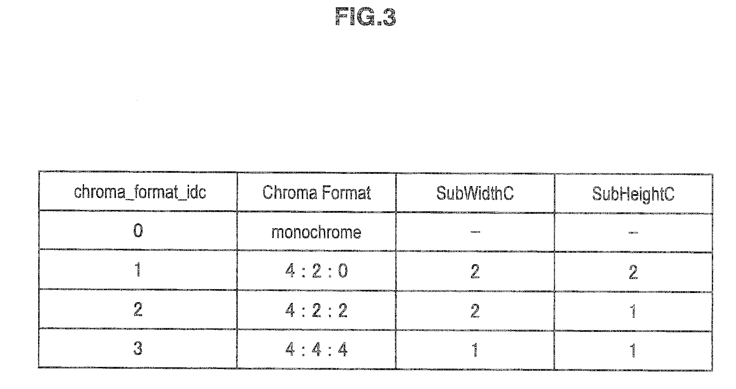

Fig. 3 is a diagram illustrating a case in which additional information moving image presence information is transmitted as a new section.

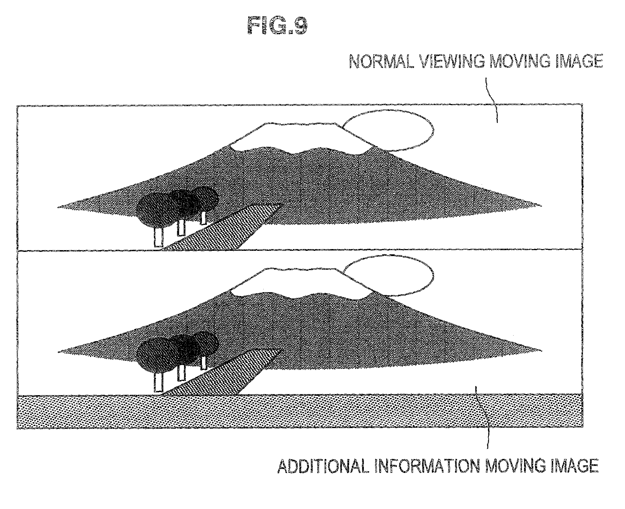

Fig. 9 is a schematic diagram illustrating a case in which a cropping position of an additional information moving is arranged directly after a normal viewing moving image.

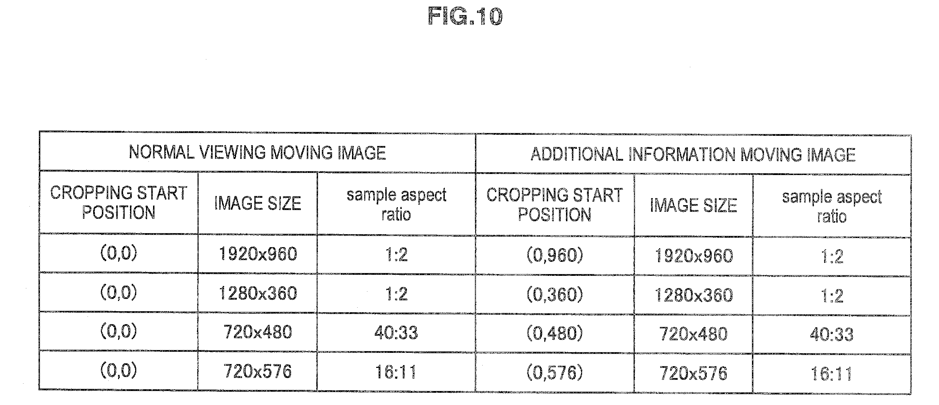

Fig. 10 is a schematic diagram illustrating agreement content when a cropping position of an additional information moving image is arranged directly after a normal viewing moving image.

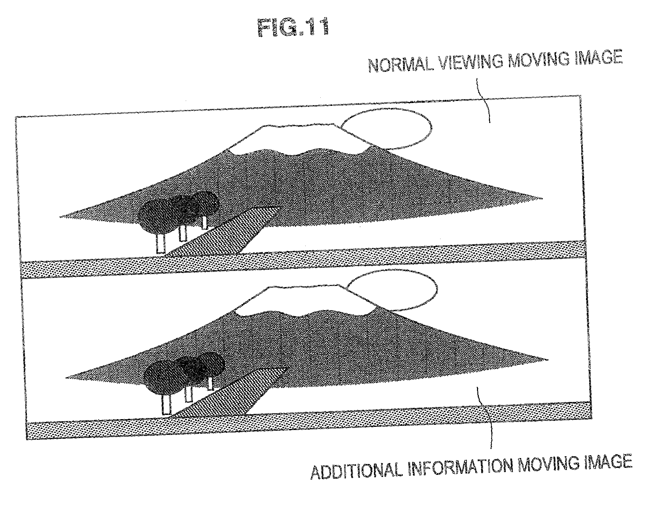

Fig. 11 is a schematic diagram illustrating a case in which a right-eye moving image is arranged with a spare a left-eye moving image.

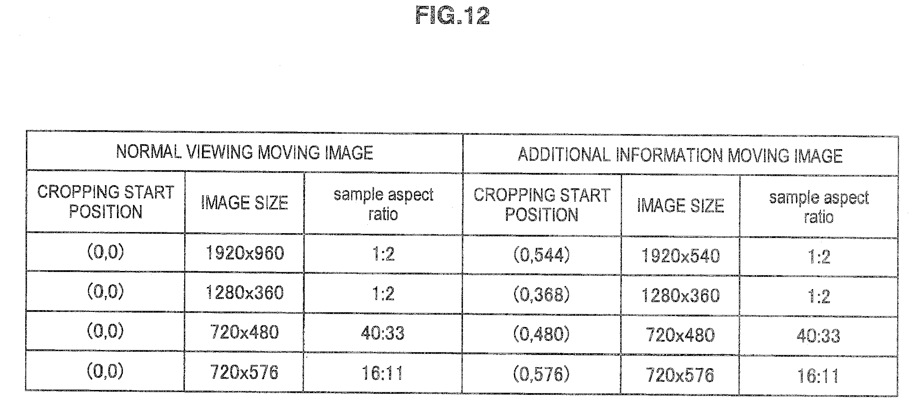

Fig. 12 is a schematic diagram illustrating agreement content in the case of Fig.11.

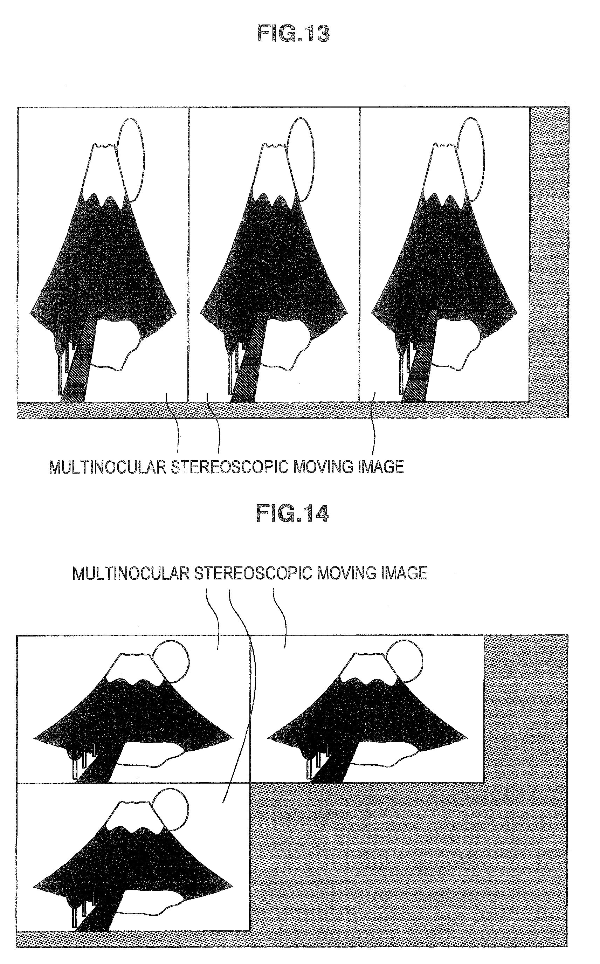

Fig. 13 is a schematic diagram illustrating an arrangement state of an integrated image when it is agreed to arrange moving images of multinocular stereoscopic vision in a transverse direction.

Fig. 14 is a schematic diagram illustrating an arrangement state of an integrated image when an arrangement is performed by an agreement that after being sufficiency arranged in a transverse direction, a remaining moving image is arranged in a longitudinal direction.

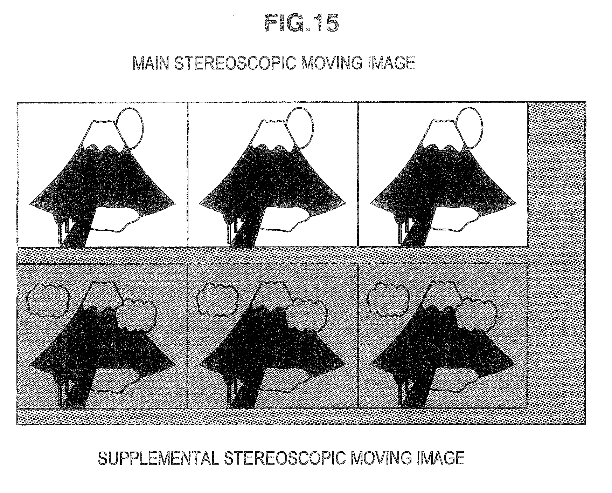

Fig. 15 is a schematic diagram illustrating an example of an integrated moving image in which main stereoscopic moving images are arranged in an upper section and supplemental stereoscopic moving images are arranged in a lower section.

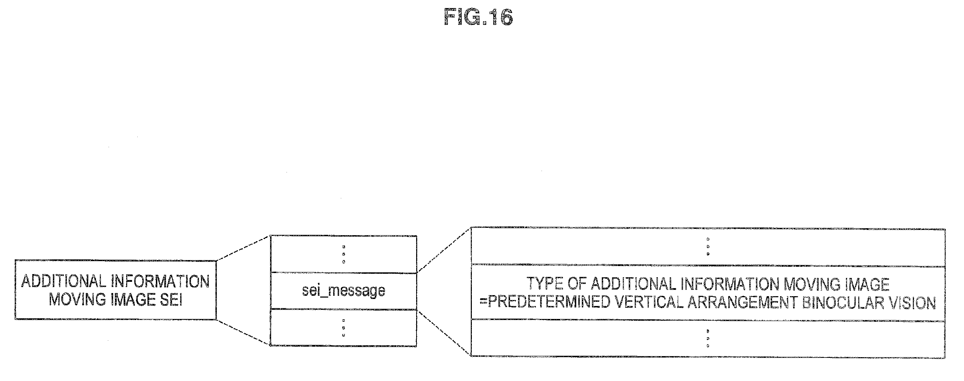

Fig. 16 is a schematic diagram illustrating the contents when additional information moving image SEI is newly added to H.264.

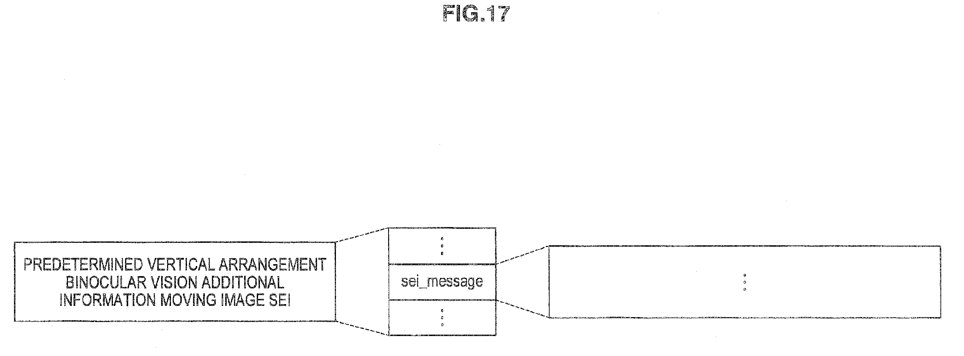

Fig. 17 is a schematic diagram illustrating a state in which an essential item of information inside sei_message disappears when SEI is newly established for each type of additional information moving image.

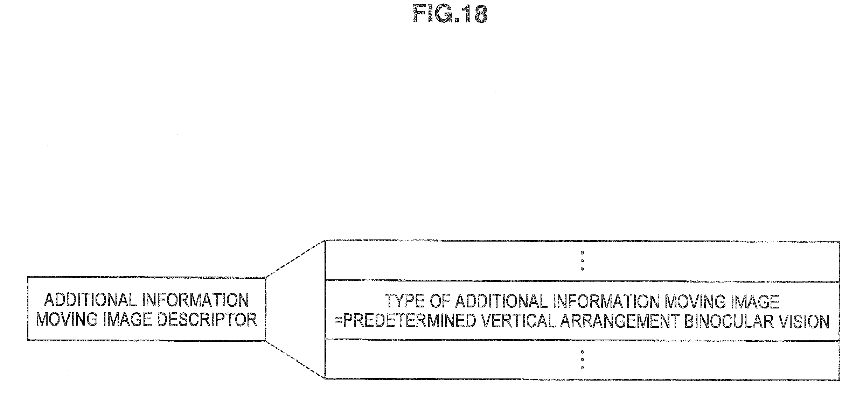

Fig. 18 is a schematic diagram illustrating the contents when an additional information moving image descriptor is newly added to a PMT.

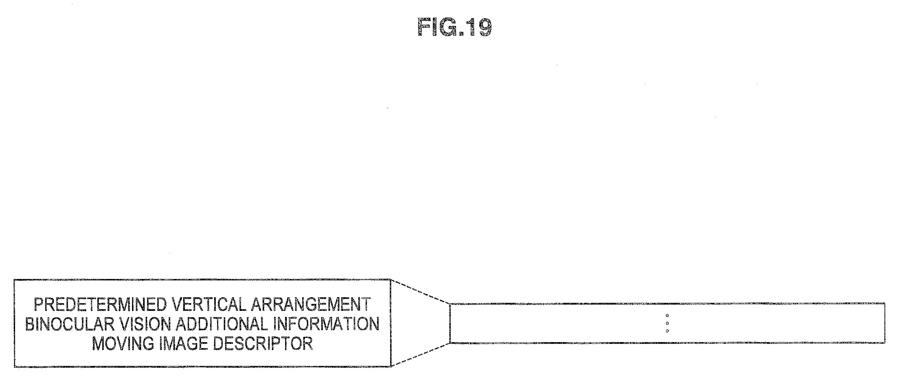

Fig. 19 is a schematic diagram illustrating information inside a descriptor when the descriptor is prepared for each type of additional information moving image.

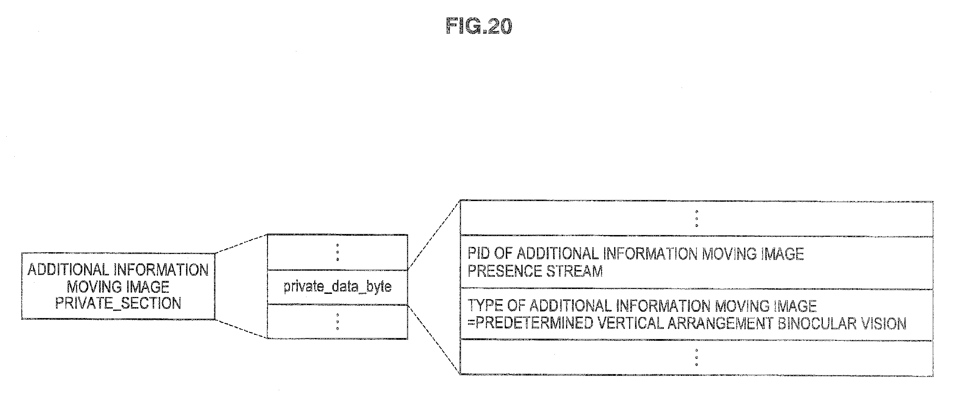

Fig. 20 is a schematic diagram illustrating the contents of private_data_byte when transmission of the additional information moving image presence information is added to a private section of MPEG2-TS.

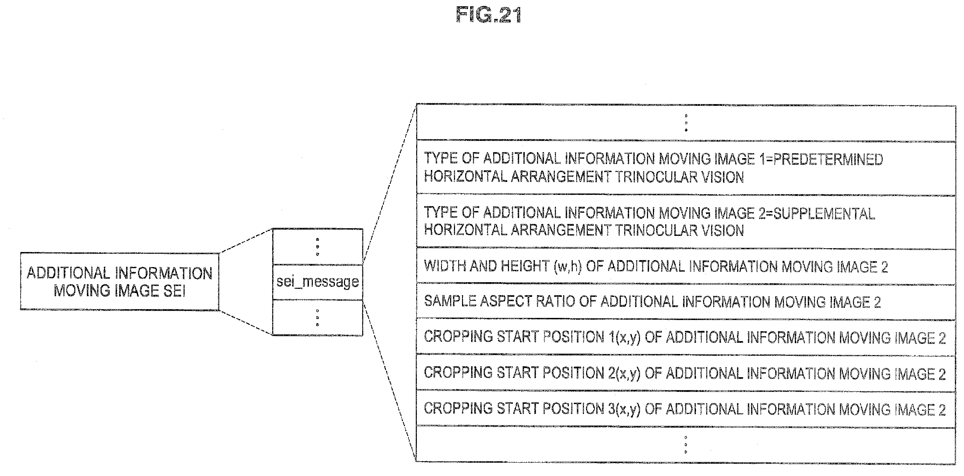

Fig. 21 is a schematic diagram illustrating the contents when additional information moving image SEI is newly added to H.264.

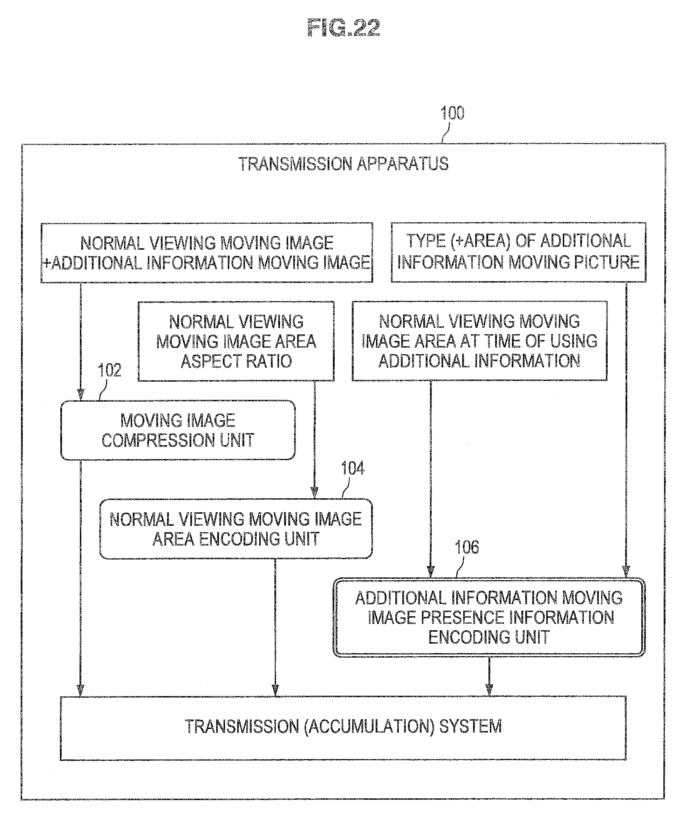

Fig. 22 is a block diagram illustrating a transmission apparatus according to the present embodiment.

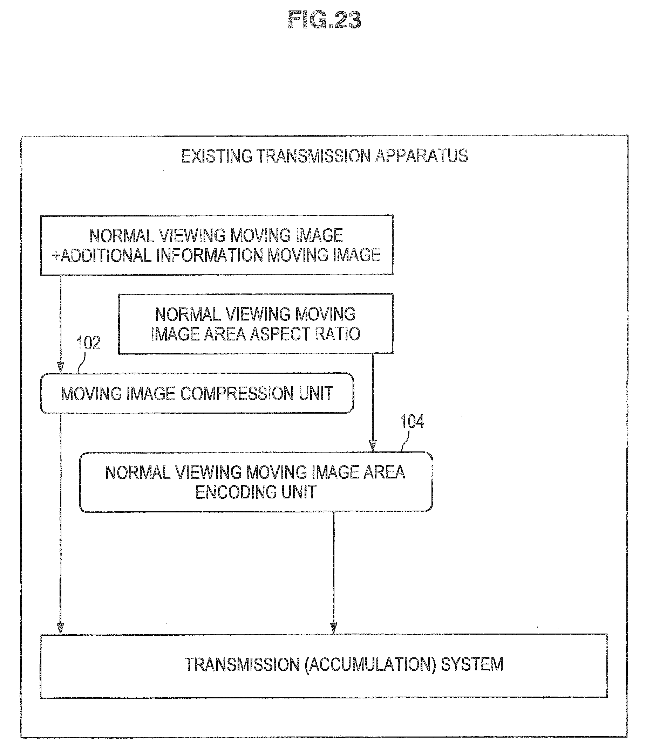

Fig. 23 is a schematic diagram illustrating an existing transmission apparatus.

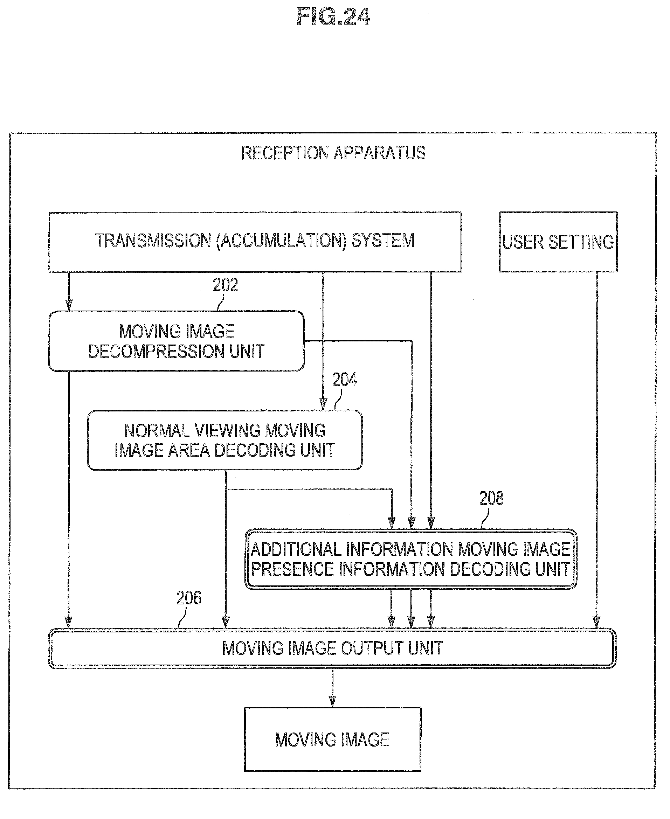

Fig. 24 is a schematic diagram illustrating a reception apparatus according to the present embodiment.

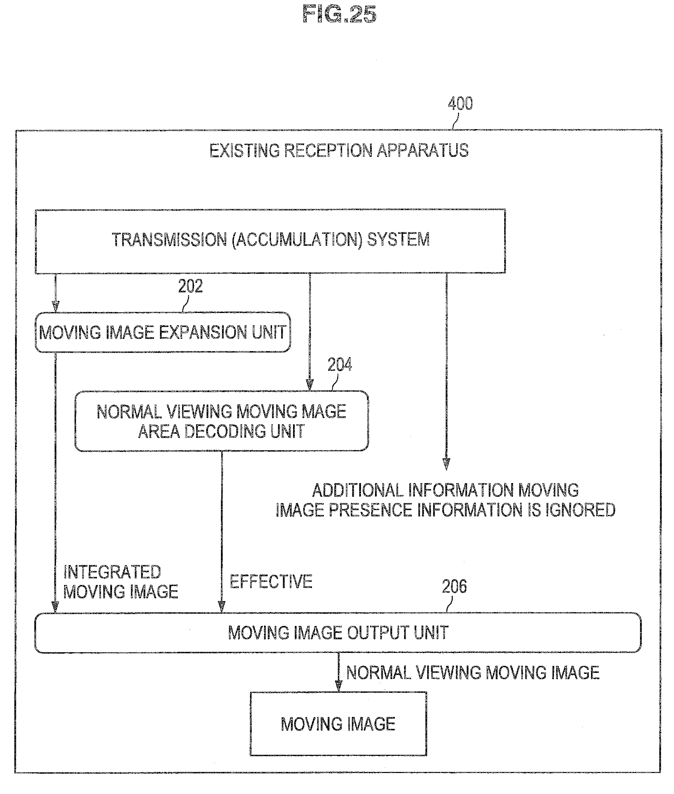

Fig. 25 is a schematic diagram illustrating an existing reception apparatus.

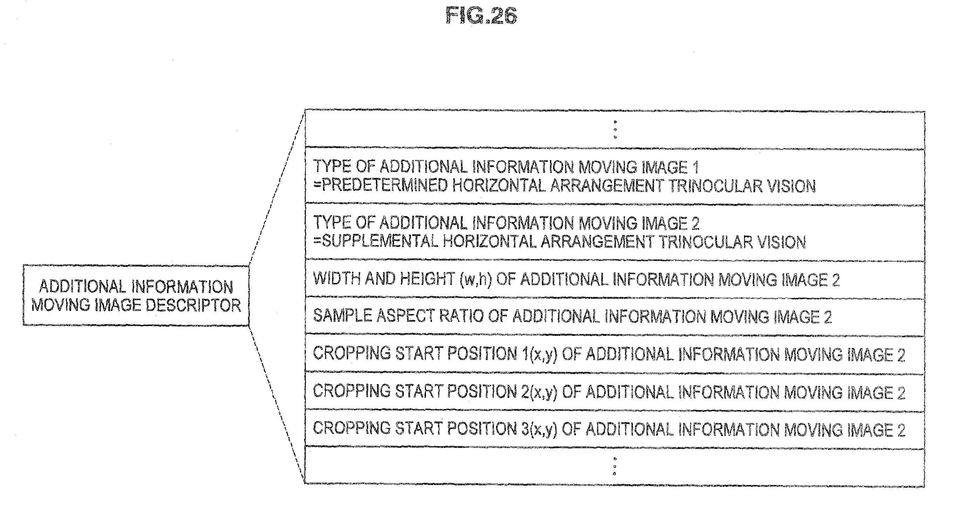

Fig. 26 is a diagram illustrating the contents when an additional information moving image descriptor is newly added to a descriptor of a PMT.

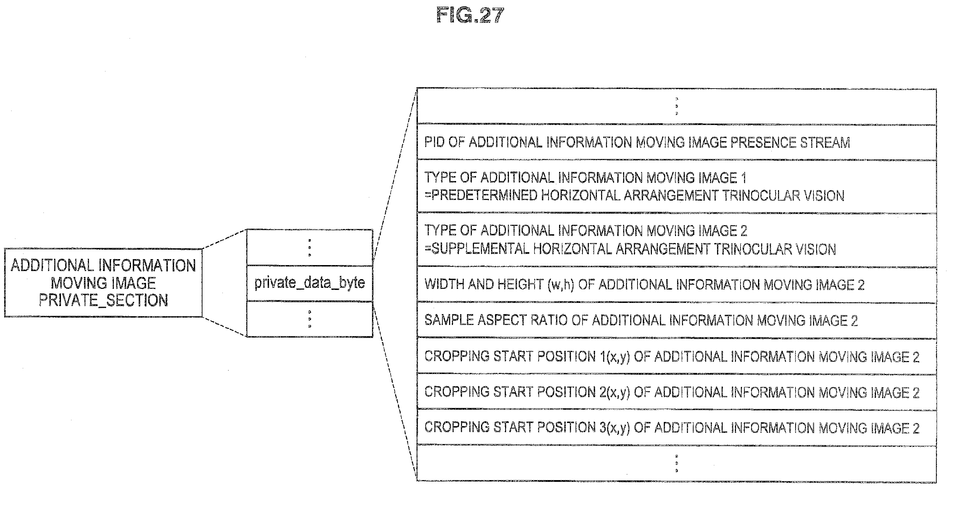

Fig. 27 is a diagram illustrating the contents of private_data_byte when transmission of the additional information moving images presence information is added to a private section of MPEG2-TS.

Fig. 28 is a schematic diagram illustrating a state in which a normal viewing moving image and an additional information moving image are contracted on the same screen in a vertical direction or a horizontal direction and then collaterally displayed at the same time.

Fig. 29 is a schematic diagram illustrating a state in which a normal Viewing moving image and an additional information moving image are contracted on the same screen in a vertical direction or a horizontal direction and then collaterally displayed at the same time.

Fig. 30 is a schematic diagram illustrating a state in which only one eye moving image (a normal viewing moving image) is displayed at a correct aspect ratio.

Fig. 31 is a schematic diagram illustrating a case in which a left-eye moving image of 1440×1080 as a normal viewing moving image and a right-eye moving image of 4800×1080 as an additional information moving image are arranged in an integrated image.

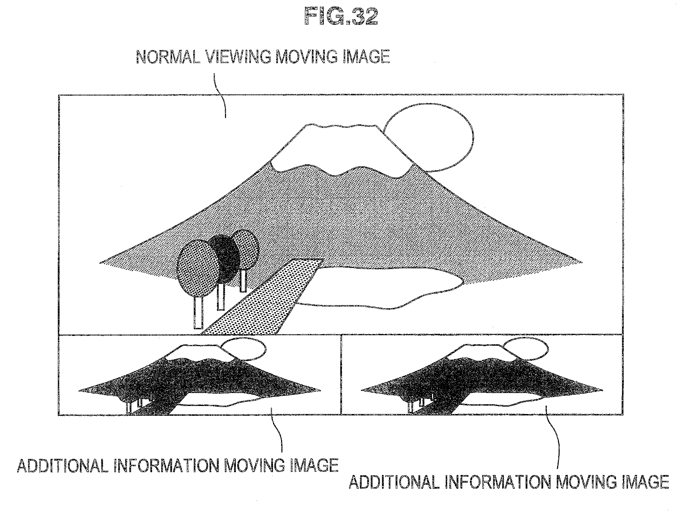

Fig. 32 is a schematic diagram illustrating a case in which a central moving image of 1920×1080 as a normal viewing moving image and two images (a left moving image and a right moving image) of 1920×270 as an additional information moving image are arranged.

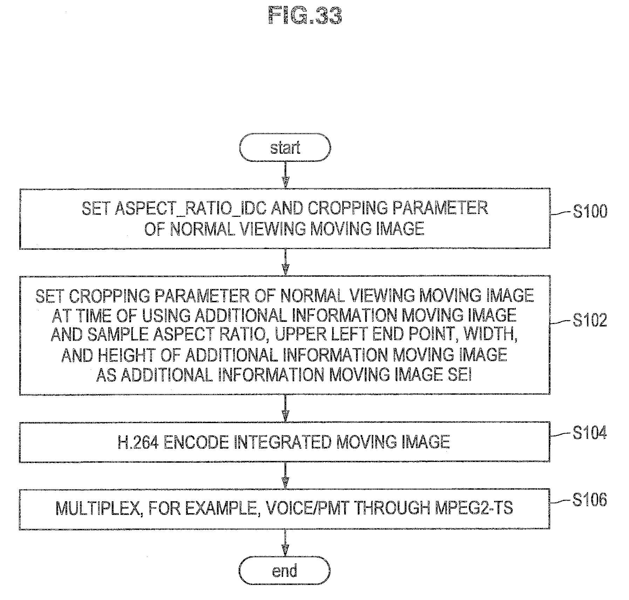

Fig. 33 is a schematic diagram illustrating a process flowchart of a transmission apparatus using H.264 as an encoder when additional information moving image SEI is used.

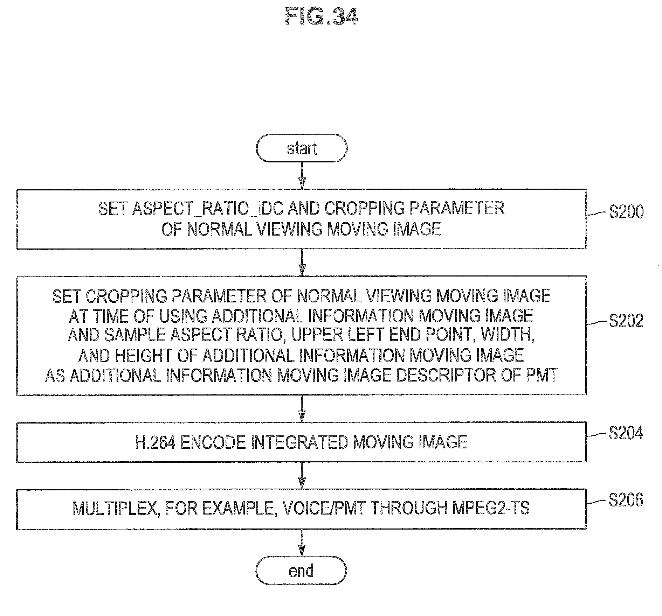

Fig. 34 is a schematic diagram illustrating a process flowchart of a transmission apparatus using H.264 as an encoder when an additional information moving image descriptor is used.

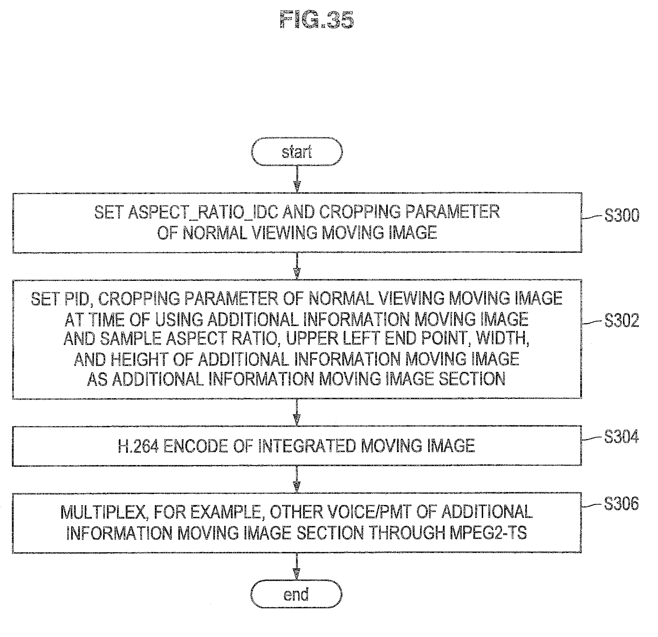

Fig. 35 is a schematic diagram illustrating a flowchart of a transmission apparatus using H.264 as an encoder when an additional information moving image section is used.

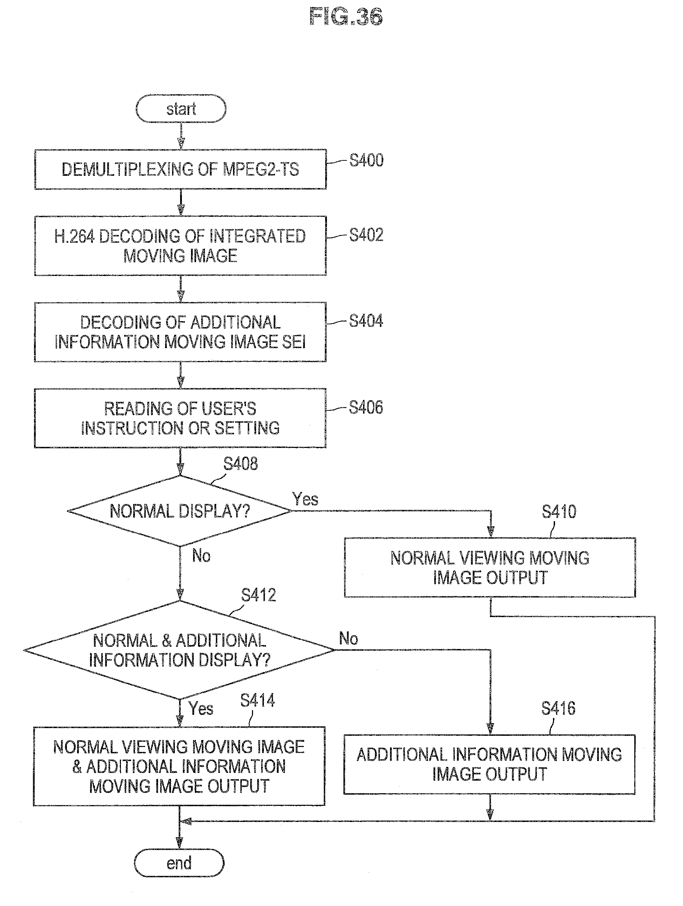

Fig. 36 is a flowchart of a reception apparatus when additional information moving image SEI added to H.26 is used.

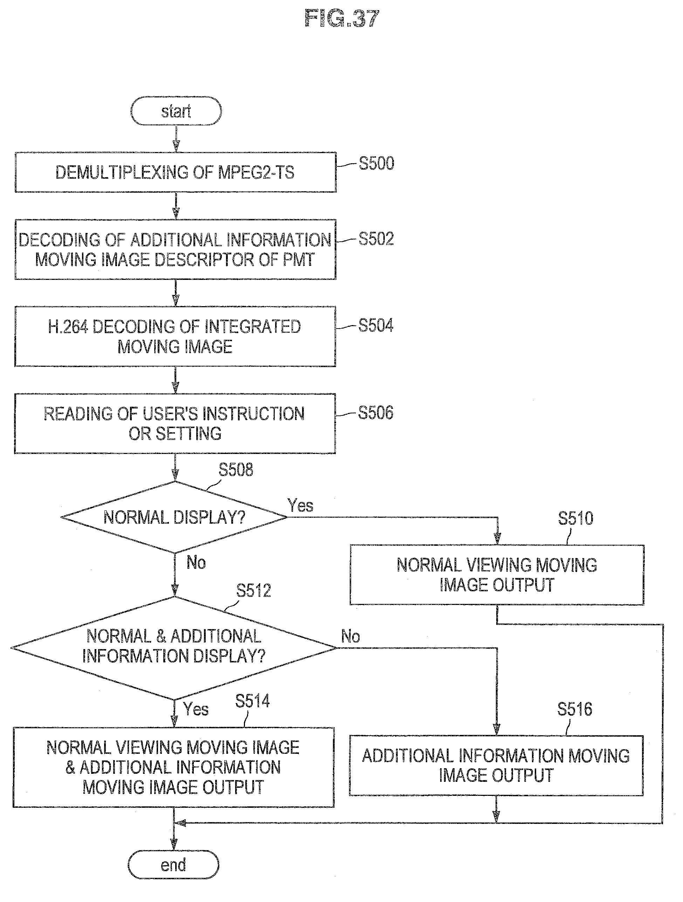

Fig. 37 is a flowchart of a reception apparatus when an additional information moving image descriptor added to a descriptor of a PMT is used.

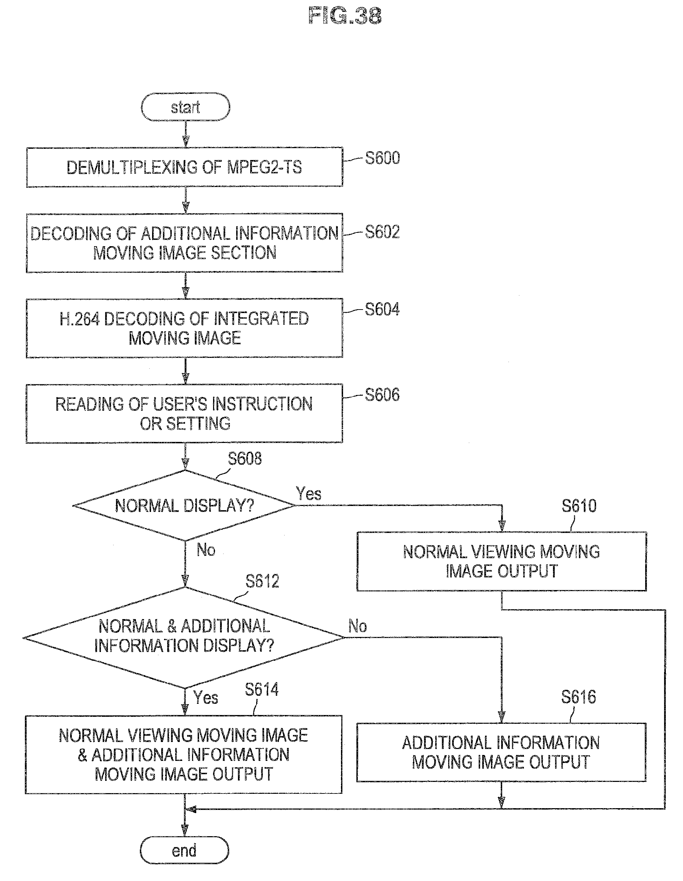

Fig. 38 is a flowchart of a reception apparatus when an additional information moving image section added to MPEG2-TS is used.

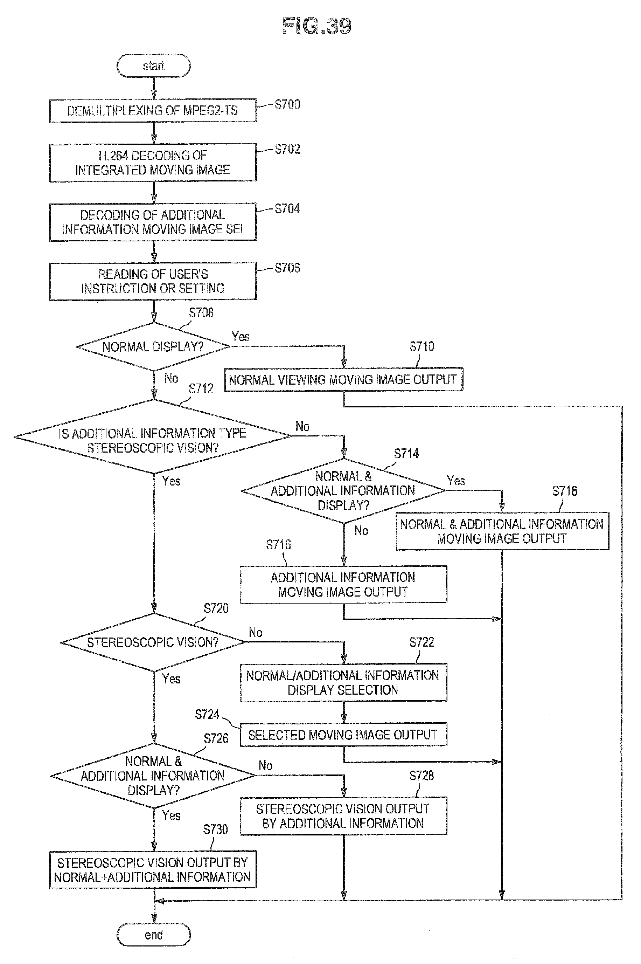

Fig. 39 is a flowchart of a reception apparatus when additional information moving image SEI added to H.264 is used.

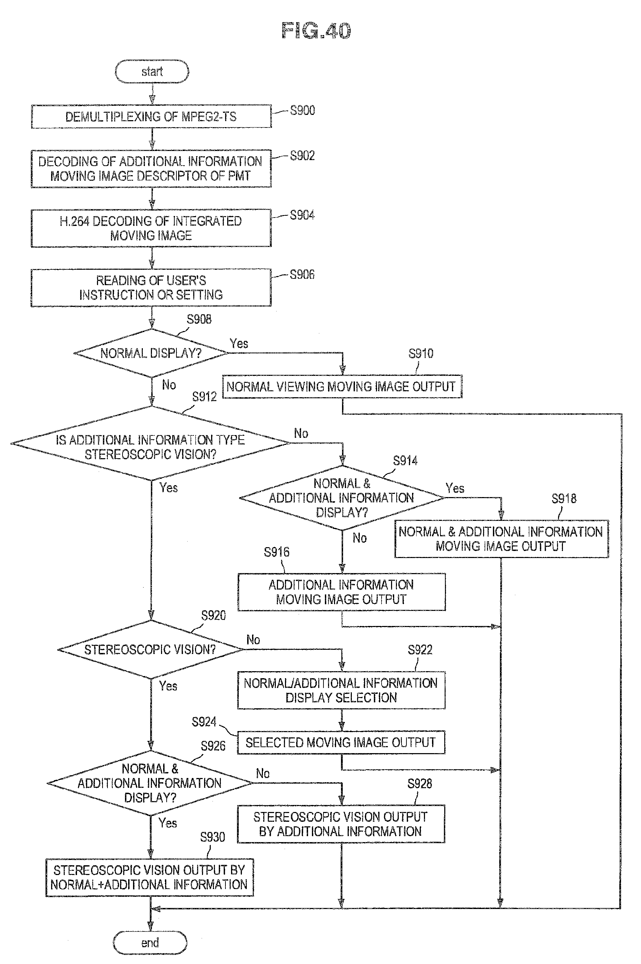

Fig. 40 is a flowchart of a reception apparatus when an additional information moving image descriptor added to a descriptor of a PMT is used.

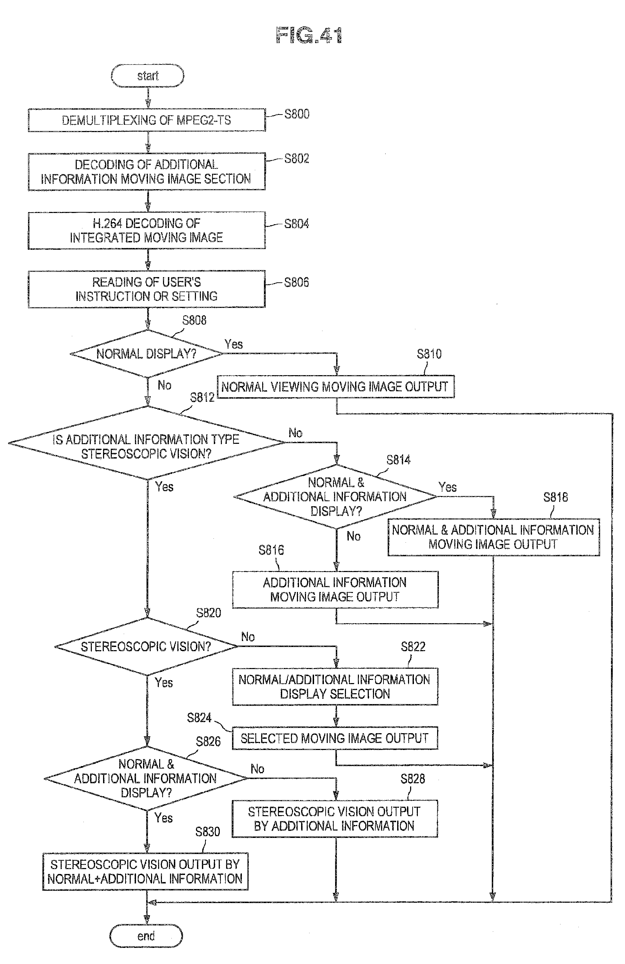

Fig. 41 is a flowchart of a reception apparatus when an additional information moving image section added to MPEG2-TS is used.

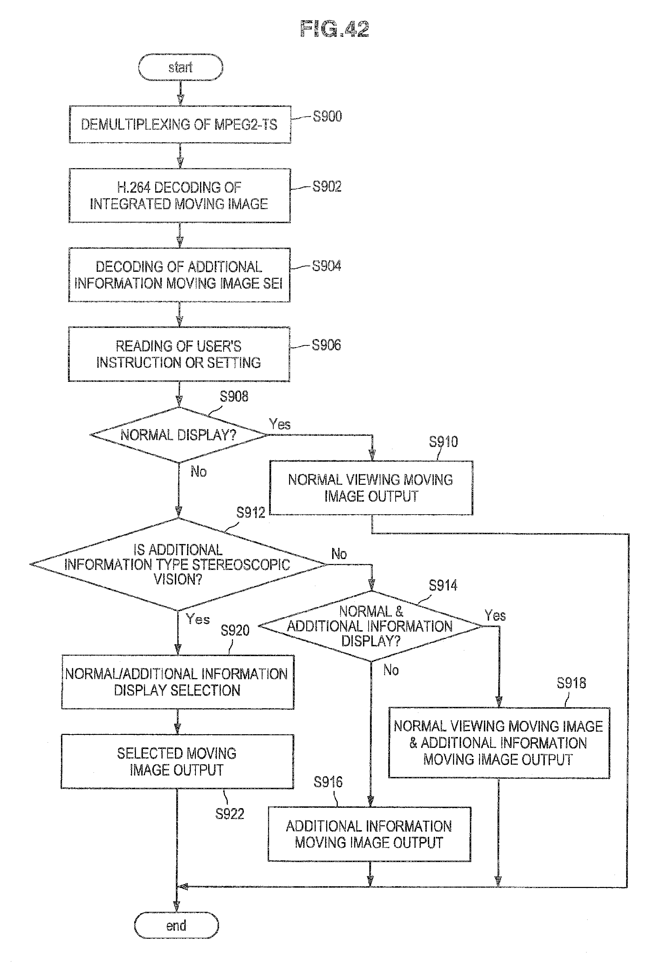

Fig. 42 is a flowchart of a reception apparatus when additional information moving image SEI added to H.264 is used.

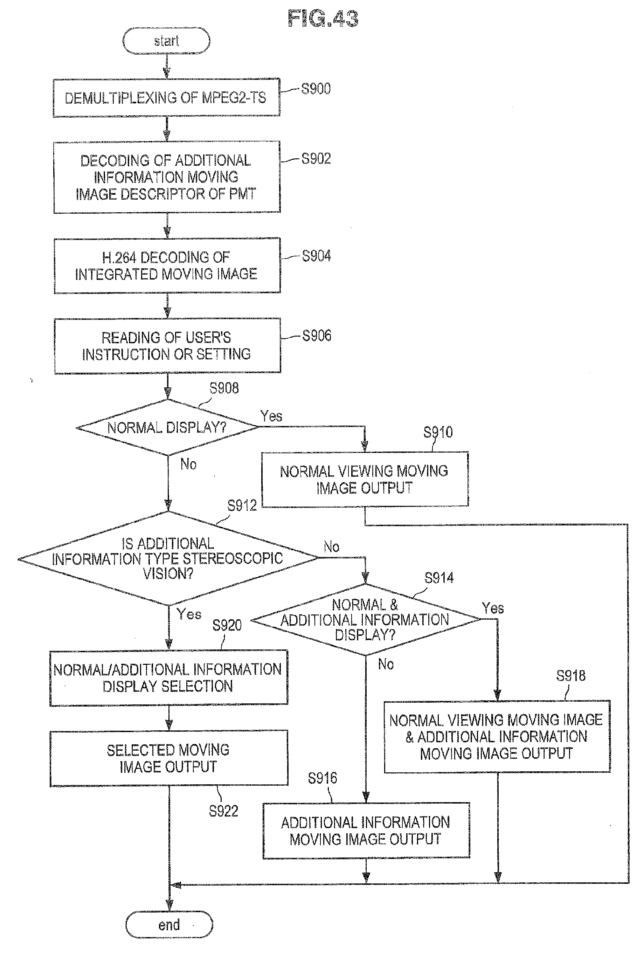

Fig. 43 is a flowchart of a reception apparatus when an additional information moving image descriptor added to a of a PMT is used.

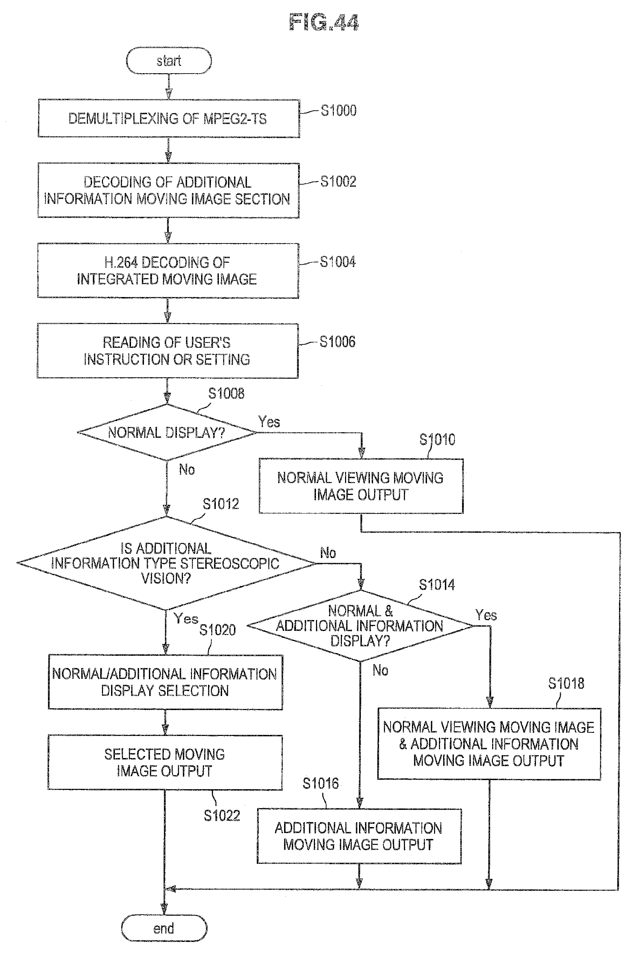

Fig. 44 is a flowchart of a reception when an additional information moving image section added to MPEG2-TS is used.

Description of Embodiments

Hereinafter, embodiments of the invention will describes in detail with to the appended drawings. Note that, in this specification and the drawings, elements that have substantially the same function and structure are denoted with the same reference signs, and repeated explanation is omitted.

Further, a description will be made in the following order.

1. First Embodiment (Example of Transmitting Plurality of Arbitrary images)
2. Second Embodiment (Application to Stereoscopic Image)

[1. First Embodiment] First, a concept of a system according to the present embodiment will be described with reference to the drawings. Here, an example of the contents of a golf relay will be described in connection with a case of transmitting a moving image, which is not used for binocular stereoscopic vision, as an additional information moving image. However, the contents of the golf relay are merely an example, and the application scope of the present invention is not limited to the golf relay.

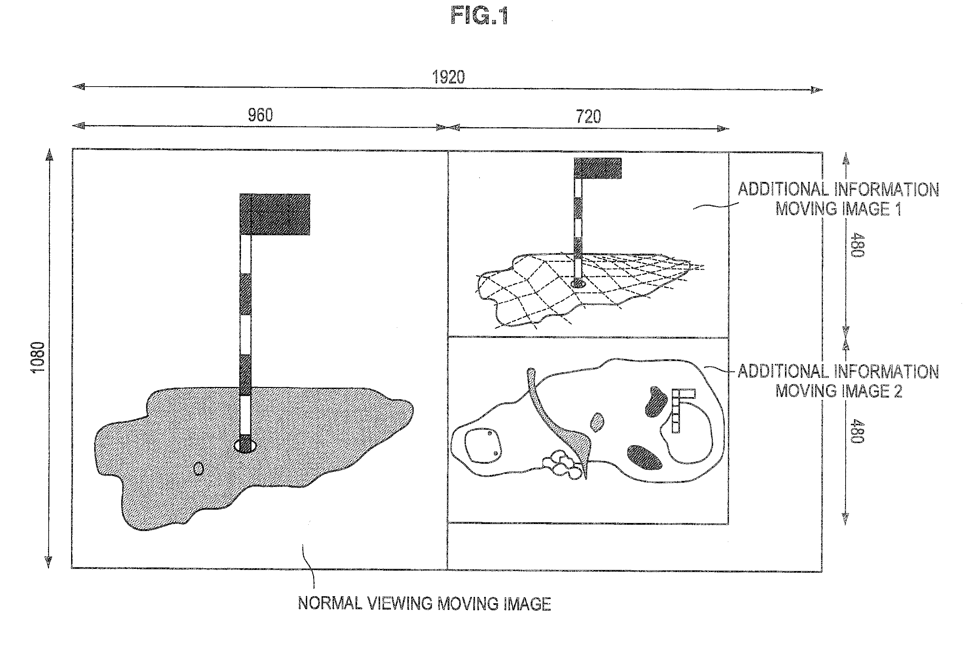

Fig. 1 illustrates a status in which a normal viewing moving image and an additional information moving image are displayed on one screen, and numbers in Fig. 1 represent the number of pixels. Here, as an example, a situation around a green will be described in connection with a case of using a technique of the present embodiment. The normal viewing moving image is a moving image through which a normal golf relay is performed and also a moving image corresponding to the current program content (a main program). Meanwhile, the additional information moving image is a moving image separate from the normal viewing moving image, and the program content is enriched by providing a moving image created at a point of view different from the normal viewing moving image.

For example, as illustrated in Fig. 1, when a video on a green is shown through the normal viewing moving image, the additional information moving image allows a user to be able to capture a scene of a video from various angles using a moving image that enables a slope of a green or a glass grain to be known, a moving image of a facial expression of another player, who has already holed out, gazing at a monitor, or the like. Further, when the normal viewing moving image is a video in which the player walks on the fairway, a configuration in which a reproduction image of an immediately previous driver shot or a moving image showing a gallery is used as the additional information moving image may be considered.

integrate Moving Image>

In the present embodiment, in order to reduce a change in a current moving image compression and decompression means, the normal viewing moving image and the additional information moving image are arranged on one frame (or field) and subjected to a compression and decompression process as one moving image (hereinafter referred to as an "integrated

Fig. 1 illustrates one frame of the integrated moving image in which a moving image for normal viewing showing a ball placed on a green, a moving showing the entire hole from the top, and a moving image for commenting on a green slope are arranged on one frame. Even if the its instead of the frame, the effectiveness of the embodiment does not change.

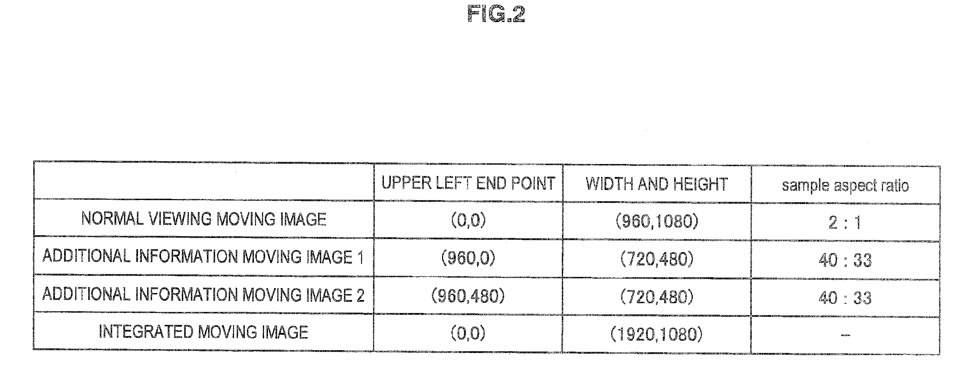

Fig. 2 illustrates arrangement information of Fig. 1 as a table. Fig. 2 illustrates arrangement information of moving images when the size of the integrated moving image is 1920×1080 pixels and the upper left coordinates of the integrated image are (0,0). Since normal viewing moving image is attached from the upper left, an upper left end point is (0,0). The normal viewing moving image is an image reduced to half in a width direction (a horizontal direction), and the widthxthe height is 960×1080 pixels. Since it is reduced, a sample aspect ratio is 2:1. Meanwhile, an additional information moving image has the image or 720×480 pixels, and since a moving image created under the assumption of a screen of 16:9 is assumed together, the sample aspect ratio is 40:33. The area and the sample aspect ratio need not particularly be matched between the two additional information moving images, and the number of the additional information moving images is not limited to two.

<Current Broadcasting>

A description will be made in connection with a case of broadcasting the integrated moving image through a current digital broadcasting system. In the current digital broadcasting system, a moving image and a voice are encoded and transmitted by a packet multiplexing scheme called an MPEG-2 transport stream (TS). MPEG-2 video and H.264 (AVC) are mainstream moving image codecs, and the moving image is compressed and transmitted by the codecs.

<configuration of Transmission Apparatus>

Fig. 22 is a block diagram illustrating a transmission apparatus according to the present embodiment. As illustrated in Fig. 22, a transmission apparatus 100 includes a moving image compression unit 102, a normal viewing moving image area encoding unit 104, and an additional information moving image presence information encoding unit 106. Input to the transmission apparatus 100 of Fig. 22 includes an integrated moving image in which the normal viewing moving image and the additional information moving image are integrated, an area and an aspect ratio of the normal viewing moving image inside the integrated moving image, a type and an area (when there is no prior agreement between transmission and reception) of the additional information moving image, and an area of the normal viewing moving image inside the integrated moving image at the time of using the additional information moving image (when there is no prior agreement between transmission and reception), and output thereof includes a stream in which the inputs are encoded. Fig. 23 illustrates an existing transmission apparatus. The existing transmission apparatus is different from the transmission apparatus 100 of Fig. 22 in that the encoding information moving image presence information encoding unit 106 is not installed. The configurations of Figs. 22 and 23 may be implemented with hardware such as a circuitry or a central processing unit (CPU) and a program (software) that operates the CPU. A reception apparatus which will be described later is also similar.

<compression of Integrated Moving Image and Area Encoding of Normal Viewing Moving Image>

In the present embodiment, moving image compression is performed on the integrated moving image arranged as illustrated in Fig. 1 by the moving image compression unit 102 through an existing codec. Further, among the arrangement information of Fig. 2, information (the upper left end point, the width, and the height) representing the sample aspect ratio and the area of the viewing moving image is encoded by the normal viewing moving image area encoding unit 104 using an encoding scheme of the existing codec.

First, for example, when the codec of the moving image is H.264, the sample aspect ratio of the normal viewing moving image is designated using "aspect_ratio_idc," "sar_width," and "sar_height" which are present in video usability information (VUI) inside a sequence parameter set (SPS).

A plurality of sample aspect ratios are illustrated in Fig. 2, but the sample aspect ratio of the normal viewing moving image is used so that the normal viewing moving image can be displayed at a correct aspect ratio. In the case of Fig. 2, since the sample aspect ratio of the normal viewing moving image is 2:1, setting of "sar_width" and "sar_height" is unnecessary, and it is desirable to designate "aspect_ratio_idc=16".

information of the area of the normal viewing moving image is encoded as a cropping area of the normal viewing moving image in the integrated moving image. For example, when the codec of the moving image is H.264, it is set as a cropping parameter that crops the normal viewing moving image from the integrated moving image using "frame_crop_left_offset," "frame_crop_right_offset," "frame_crop_top_offset," and "frame_crop_bottom_offset", which are present in the SPS.

The cropping parameter and a rectangular area of an area to be cropped have the following relationship. Using SubWidthC and SubHeightC illustrated in Fig. 3,
the coordinates (xs,ys) of the upper left end point are represented as follows:

$$xs=SubWidthC*frame\_crop\_left\_offset$$

$$ys=SubHeightC*(2-frame\_mbs\_only\_flag)*frame\_crop\_top\_offset$$

The coordinates (xe,ye) of the lower right end point are represented as follows:

$$xe=PicWidthInSamles-(SubWidthC*frame\_crop\_right\_offset+1)$$

$$ye=16*FrameHeightInMbs-(SubHeightC*(2-frame\_mbs\_only\_flag)*frame\_crop\_bottom\_offset+1)$$

"chroma_format_idc" and "frame_mbs_only_flag" are parameters that are present in the SPS of H.264 together.

In current broadcasting, since "chroma_format_idc' is 1, SubWidthC is 2, and SubHeightC is 2. "frame_mbs_only_flag" is a flag representing whether moving image compression is performed, in units of frames or in units of fields.

Since Fig. 1 illustrates an arrangement the frame, a description will be made under the assumption that compression is performed in units of frames, and "frame_mbs_only_flag" is 1. When compression is performed in units of fields, a calculation may be performed by setting "frame_mbs_only_flag"=0, and the present embodiment is effective when compression is performed in units of fields.

Thus, xs, xe, ys, and ye are as follows:

$$xs=2*frame\_crop\_left\_offset$$

$$ys=2*frame\_crop\_top\_offset$$

$$xe=PicWidthInSamles-(2*frame\_crop\_right\_offset+1)$$

$$ye=16*FrameHeightInMbs-(2*frame\_crop\_bottom\_offset+1)$$

As a result, the width w and the height h of the image to be cropped are as follows:

$$w=PicWidthInSamles-2*frame\_crop\_left\_offset-2*frame\_crop\_right\_offset$$

$$h=16*FrameHeightInMbs-2*frame\_crop\_top\_offset-2*frame\_crop\_bottom\_offset$$

As parameters for cropping the normal viewing moving image of Fig. 1, PicWidthInSamples is 1920 in view of the width of the integrated moving image, the height of the integrated moving image is 1080, which is not an integer multiple of 16, and thus 16*FrameHeightInMbs is 1088.

Further, in view of xs=0, ys=0, w=960, and h= 1080 of the normal viewing moving image, the following setting can be derived:

frame_crop_left_offset=0,
frame_crop_top_offset=0,
frame_crop_right_offset=480, and
frame_crop_bottom_offset=8

When the sample aspect ratio and the arrangement information of the normal viewing moving image are designated as described above and the encoding process in H.164 is performed, when the encoded stream is decoded, the normal viewing moving image is cropped from the integrated moving image and displayed at a correct aspect ratio.

The sample aspect ratio and the arrangement information of the normal viewing moving image have been encoded according to H.264, but they can be also encoded according to MPEG-2 video in a similar manner. As for the sample aspect ratio,
"aspect_ratio_information" is present in a sequence header, and parameter setting can be made by a sample aspect ratio or a display aspect ratio.

The sample aspect ratio represents an aspect ratio of a pixel directly after decompression, and the display aspect ratio represents an aspect ratio at the time of the display.

The sample aspect ratio of the normal viewing moving image of Fig. 2 is 2 : 1, and the width of the pixel is twice the height. Thus, in order to correctly display, an image of $960\times1080$ is expanded twice in a horizontal direction, and the display is performed by $1920\times1080$. Since the display aspect is the aspect of $1920\times1080$ of the display, 1920:1080 is 16:9. 16 : 9 can be by setting "aspect_ratio_information" to 3.

As for one cropping, the width and the height to be cropped can be designated by "display_.vertical__size" and "display_horizontal_size" in a display extension header. An offset between a center of a part to be output and a center of an original can be designates "frame_centre_horizontai_offset" and "frame_centre_vertical_offset" in a picture display extension header. Same aspect ratio and the arrangement information of the normal viewing moving image can be encoded by the parameters. However, in the description of ITU-T.Rec.H.264, the parameters are described along with a pan scan, there is a case in which the parameter setting cannot be freely performed depending on a broadcasting standard. In H.264, the cropping parameter can be set separately from the pan scan, and there is no parameter limitation in connection with the pan scan.

Even in other codecs, if there is a parameter for performing cropping directly after decompression of the moving image, it can be used as a designation of the sample aspect ratio and the arrangement information of the normal viewing moving image of the present invention.

Next, a description will be made on additional information moving image presence information encoded by the additional information moving image presence information encoding unit 106 of the transmission apparatus 100 illustrated in Fig. 22.

<Additional Information Moving Image Presence information>

in the example of Fig. 1, two additional information moving images, that is, additional information moving images 1 and 2, as well as the normal viewing moving image are transmitted. The additional information moving images are moving images that are effective as a supplemental moving image on a program, but they are not constantly displayed and may be regarded as moving images displayed according to a user's taste.

In the example of Fig. 1, a moving image that represents a relief of a green of a main screen from the same viewpoint and a moving image that views the entire hole from above are arranged on the integrated moving image as the supplemental moving images and transmitted.

The additional information moving image presence information refers to information representing "whether or not the supplemental moving images are present," "what the width, the height, the position, and the sample aspect ratio are when present," and "how to handle the cropping area of the normal viewing moving image when using the supplemental moving image.".

In the example of Figs. 1 and 2, the width, the height, and the sample aspect ratio of the addition information moving image are different from those of the normal viewing moving image.

Here, it is assumed that the width, the height, and the sample aspect ratio of the additional information moving image and the cropping area of the normal viewing moving image at the time of using the additional information moving image have not been previously agreed upon between a transmitter and a receiver.

<Case of Transmitting Additional Information Moving Image as SEI of H.264 Standard>

In the H.264 there is a description technique of auxiliary information called supplemental enhancement information (SEI). In the SEI, information such as retention time of inside an input/output bluffer at the time of decoding and suggestion of a point at which decoding is performed at the time of random are described.

In the embodiment, a description will be made in connection with an example in which newly adding additional information moving image SEI makes it possible to transmit the additional information moving image presence information of the present embodiment.

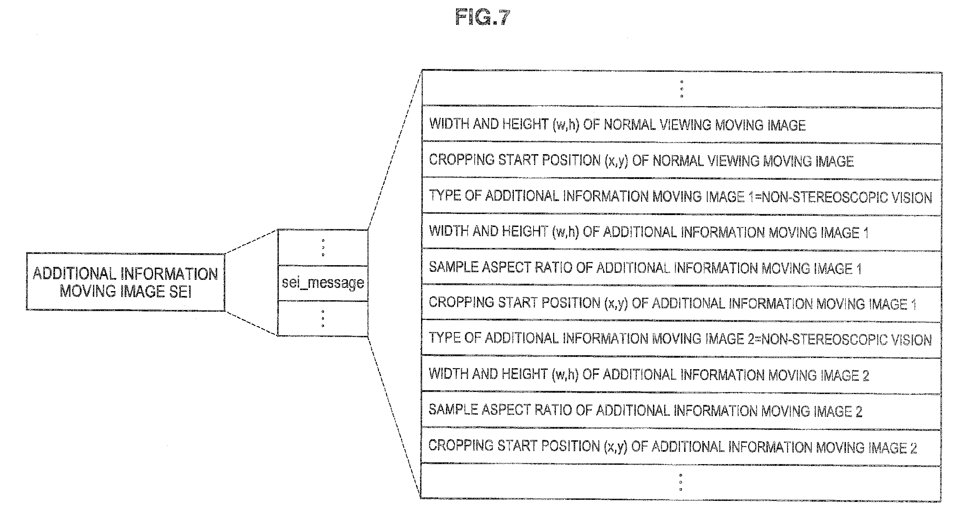

Fig. 7 illustrates a layer of the additional information moving image SEI. As "sei_message" of the SEI, the cropping start position, the width, and the height of the normal viewing moving image at the time of using the additional information moving images, a type of the additional information moving image, the number of the additional information moving images, and the cropping start position, the width, the height, and the sample aspect ratio of each additional information moving image are designated.

The SEI newly added in the present embodiment is created grammatically according to a grammar rule of H. 264. For this reason, the existing reception apparatus cannot perform decoding but can execute the next process by skipping. Fig. 33 illustrates a process flowchart of the transmission apparatus 100 using H.264 as an encoder in the case of using the Additional information moving image SEI. First, the cropping parameter and aspect_ratio_idc ("sar_width" and "sar_height" are also used if necessary) of H.264, which are calculated from the position, the width, and the height of the normal viewing moving image of the integrated moving image, are set to the encoder (step S 100).

Next, the cropping start position, the width, and the height of the normal viewing moving image at the time of using the additional information moving image and the cropping start position, the width, and the height of the additional information moving image obtained from the type, the sample aspect ratio, the upper left end point, the width, and the height of the additional information moving image are set to the encoder as the additional information moving image SEI (step S102). Further, encoder setting such as the image size of the integrated moving image is performed on the integrated moving image, and then the integrated moving image is encoded (step S104). When transmission is performed in the digital broadcasting system, a transmission stream can be obtained by performing multiplexing by MPEG2-TS (step S106).

In the designation of Fig. 7, the arrangement of the normal viewing moving image and the additional information moving image has been designated by the cropping start position, the width, and the height, but the arrangement may be designated using any other method such as a designation method of a cropping area of H.264.

The SEI is a transmission description of the H.264 standard. For example, in the case of MPEG2 video, USER_DATA may be used, and a codec having a means of transmitting supplemental information for a moving image compression/decompression process can be dealt with by newly adding a description of transmitting supplemental information.

The existing reception, apparatus (an apparatus that is already being sold in the market or has been sold) cannot the newly added additional information moving image SEI but can continue the process by skipping. Here, it is assumed that the existing reception apparatus performs a reception process by skipping the additional information moving images SEI.

Fig. 25 is a schematic diagram illustrating an existing reception apparatus, 400. In the present embodiment, encoding of the integrated moving image in which the normal viewing moving image and the additional information moving image are combined and encoding of the area of the normal viewing moving image are performed by the same process as in the existing reception apparatus. For this reason, as illustrated in Fig. 25, the integrated moving image is decoded even in the existing reception apparatus 400, and the normal viewing moving image is cropped by the above described cropping information as expected and displayed on a moving image output unit 206.

Meanwhile, Fig. 24 is a schematic diagram illustrating a reception apparatus 200 according to the present embodiment. The reception apparatus 200 according to the present embodiment includes a moving image compression unit 202, a normal viewing moving image area encoding unit 204, an additional information moving image presence information encoding unit 208, and a moving image output unit (a display panel) 206. In the reception apparatus 200 according to the present embodiment, the additional information moving image SEI can be decoded by the additional information moving image presence information encoding unit 206. Thus, the reception apparatus 200 recognizes the presence of the additional information moving image as well as the area of the normal viewing moving image and can obtain the cropping start position, the width, the height of the normal viewing moving image at the time of using the additional information moving image, the number of additional information moving images, and the cropping start position, the width, the height, and the sample aspect ratio of each additional information moving image.

<Case of Transmitting Additional Information Moving Image Presence Information as Descriptor of PMT>

In MPEG2-TS, as program system information (PSI) that describes stream information of a program to be transmitted, there is a program map table (PMT).

The stream information of the PMT includes a packet ID (PID) for selecting a packet such as an audio or a video, a stream_type, a descriptor, or the like, and it is possible to understand which one is used by a video codec or an audio codec for encoding.

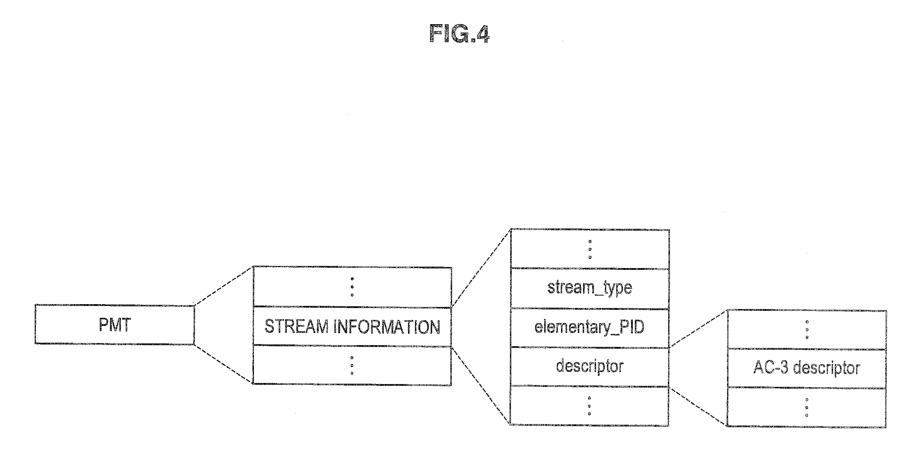

Fig. 4 illustrates stream information of a Dolby AC-3 audio. A stream_type for AC-3 is not defined in ITU_T REC.H.264, a stream_type of PES private data is used in Europe, and a stream_type of user private is used in the US.

Thus, it is difficult to specify whether or not a packet of PID designated by elementary_PID is an audio stream only through the stream_type of Fig. 4. For this reason, in AC-3, as the descriptor of the PMT, an AC-3 descriptor is and a stream of AC-3 can be judged by detecting the descriptor. As described above, in the PMT, there is a use method of setting information related to a codec of a program through a descriptor.

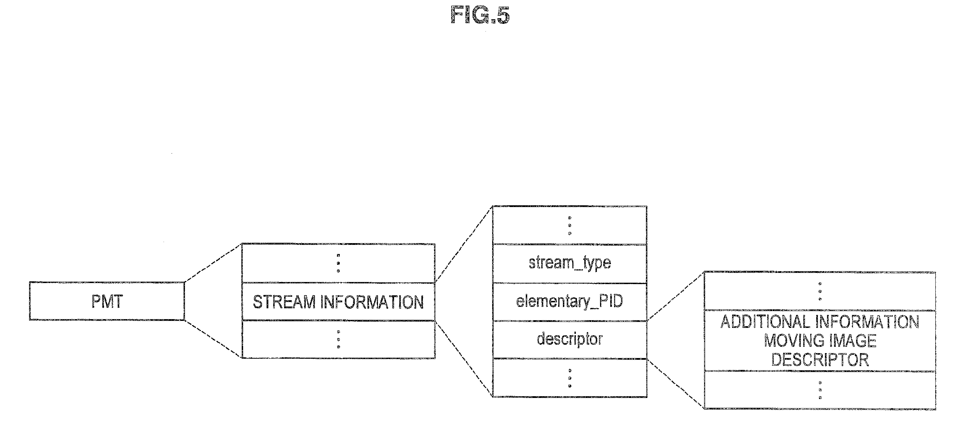

On the basis of the use method, even in the present embodiment, an example of adding a descriptor to the PMT and transmitting the additional information moving image, presence information will be described, Fig. 5 illustrates a case in which an additional information moving image descriptor is added to the stream information of the PMT. Through the additional information moving image descriptor, it is notified that the packet with the PID designated by the elementary_ PID includes the integrated moving image that has been subject to moving image compression and presence of the additional information moving image, and a parameter for using the additional information moving image is notified.

If compression of the integrated moving image has been performed, by H.264, the stream_type is set as 0x1B, and if it has been performed by MPEG2, the stream_type is set as 0x2. Since the additional information moving image descriptor does not depend on the codec, the same one can be used in both MPEG2 and H.264. Of course, the existing reception apparatus cannot interpret the additional information moving image descriptor and usually operates to ignore it.

However, even in the existing reception apparatus 400, if the integrated moving image and the area setting or the sample aspect ratio of the normal viewing moving image have been set according to the present embodiment, the integrated moving image can be decoded, and the normal viewing moving image is cropped therefrom, and thus the normal viewing moving image can be correctly displayed.

Meanwhile, in the reception apparatus 200 according to the present embodiment, the additional information moving image descriptor can be decoded and interpreted by the additional information moving image presence information decoding unit 208. For this reason, it can be recognized that the additional information moving image is present outside the area of the normal viewing moving image.

In the present embodiment, since it is assumed that the cropping area of the normal viewing moving image at the time of using the additional information moving image and the width, the height, and the sample aspect ratio of the additional information moving image have not previously been agreed upon between the transmitter and the receiver, the parameters are included in the additional information moving image descriptor and then transmitted.

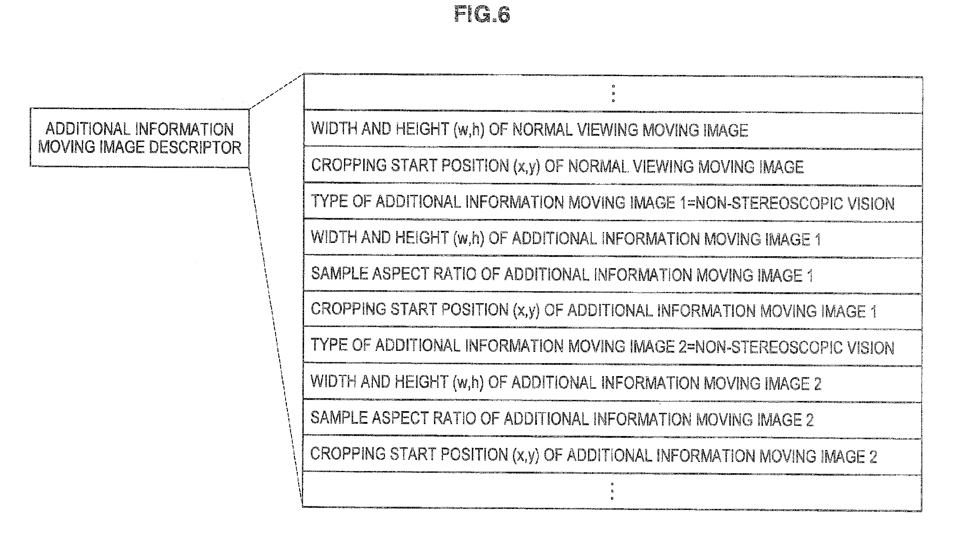

Fig. 6 illustrates an example of the contents of the additional information moving image descriptor. Fig. 34 illustrates a process flowchart of a transmission apparatus using H.264 as an encoder when the additional information moving image descriptor is used. First, the cropping parameter and aspect_ratio_idc ("sar_width" and "sar_height" are also used if necessary) of H.264, which are calculated from the position, the width, and the height of the normal viewing moving image of the integrated moving image, are set to the encoder (step S200). Next, the cropping start position, the width, and the height of the normal viewing moving image at the time of using the additional information moving image and the cropping start position, the width, and the height of the additional information moving image obtained from the type, the sample aspect ratio, the upper left end point, the width, and the height of the additional information moving image are prepared as the additional information, moving image descriptor of Fig. 6 (step S202). Further, encoder setting such as the image size of the integrated moving image is performed on the integrated moving image, and then the integrated moving image encoded (stew S204.). In the of MPEG2-TS multiplexing necessary for transmission in the digital broadcasting system, a transmission stream can be obtained by setting the prepared additional information moving image descriptor to the PMT (stew S206).

In the example of Fig. 2, since both of the two additional information moving images that are present in addition to the normal viewing moving image are non-stereoscopic additional information moving images, the additional information moving image type is set to non-stereoscopic vision, and following the cropping start position, the width, and the height of the normal viewing moving image at the time of using the additional information moving image, the type of the additional information moving image, the number of additional information moving images, and the cropping start position, the width, the height, and the sample aspect ratio of each additional information moving image are designated in order.

Here, the start position, the width, and the height have been used for the area designation of the normal viewing moving image and the additional information moving image. However, since an object is to designate the arrangement inside the integrated moving image, the designation may be performed in the same manner as the cropping designation method of H.264 or may be performed by any other method.

In addition to the format of the additional information moving image descriptor of Fig. 6, a descriptor may be prepared as the non-stereoscopic additional information moving image descriptor for each type of the additional information moving image, and so the field of the additional information moving image type in the descriptor can be omitted. Further, the field of the number of additional information moving images can be omitted by preparing the descriptor for each of the additional information moving image 1 and the additional information moving image 2 and describing a plurality of additional information moving image descriptors in the stream information of the PMT.

The present invention is also effective for MPEG2-PS, and by newly adding the descriptor storing the additional information moving image presence information into a program stream map (PSM), it effectively works similarly to the case in which the additional information moving image descriptor is newly added to the PMT of MPEG2-TS.

Even in the case of a container other than MPEG2, supplemental information can be described on all video data, and a format capable of adding supplemental information can be applied in a manner similar to the above descriptor addition.

<Case of Transmitting Additional Information Moving image Presence Information as Private Selection>

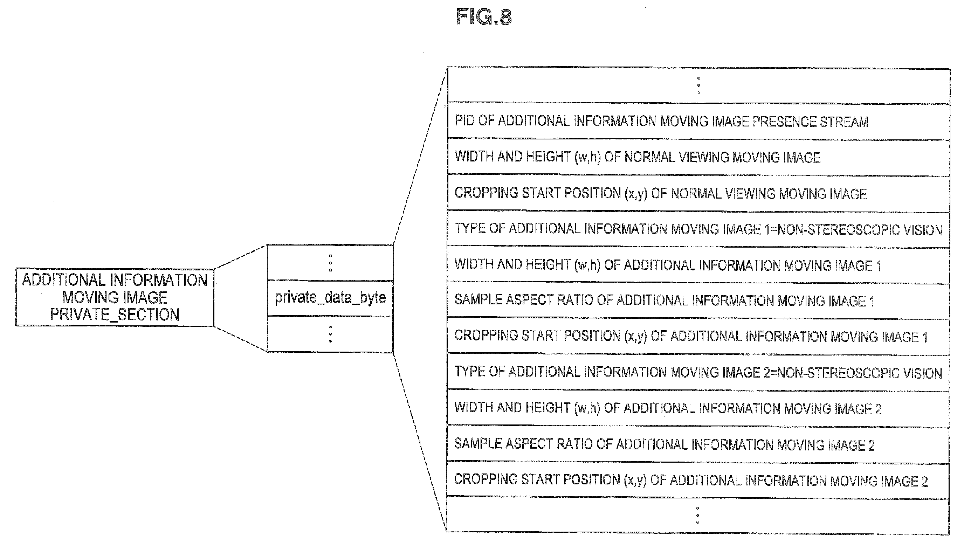

In MPEG2-TS, section data can be transmitted to the same layer as the layer of the PMT. Under the assumption that new addition to the section is performed, the private section may be considered, and the additional information moving image information of the present embodiment may be also transmitted as a new private section. Fig. 8 illustrates a case in which the additional information moving image presence information is transmitted as the new private section.

Since the new section cannot be decoded in the existing reception apparatus, 400, similarly to the descriptor of the PMT, it is skipped in the existing reception apparatus 400.

Fig. 8 illustrates a case in which following the PID for identifying the packet of the integrated moving image of Fig. 2 and the cropping start position, the width, and the height of the normal viewing moving image at the time of using the additional information moving image, the type of the additional information moving image and the cropping start position, the width, the height, and the sample aspect ratio of the additional information moving image are designated in order.

Fig. 35 illustrates a flowchart of a transmission apparatus using H.264 as an encoder when the additional information moving image section is used. First, the cropping parameter and aspect_ratio_idc ("sar_width" and "sar_height" are also used if necessary) of H.264, which are calculated from the position, the width, and the height of the normal viewing moving image of the integrated moving image, are set to the encoder (step S300). Next, the PID for identifying the packet, the cropping start position, the width, and the height of the normal viewing moving image at the time of using the additional information moving image, and the cropping start position, the width, and the height of Additional information moving image obtained from the type, the sample aspect ratio, the upper left end point, the width, and the height of the additional information moving image are prepared as the additional information moving image section of Fig. 6 (step S302). Further, encoder setting such as the image size of the integrated moving image is performed on the integrated moving image, and then the integrated moving image is encoded (step S304). In the case of MPEG2-TS multiplexing necessary for transmission in the digital broadcasting system, a transmission stream can be obtained by multiplexing the prepared additional information moving image section together (step S306).

Further, since the area designation of the normal viewing moving image and the additional information moving image are to specify the arrangement inside the integrated moving image, the arrangement may be designated using any other method such as the designation method of the cropping area of H.264.

Further, if the private section is newly added for each type of the additional information moving image, the type of the additional information moving image can be omitted.

Using any one of the three methods of storing the additional information moving image presence information, the additional information moving image presence information is encoded by the additional information moving image presence information encoding unit 106 of the Transmission apparatus, 100 of the present embodiment.

Thus, it is possible to obtain the stream in which the integrated moving image, the normal viewing moving image area, the cropping start area and, the sample aspect ratio of the normal viewing moving image at the time of using the additional information moving image, and the additional information moving image presence information are encoded.

When the stream has been obtained using the video codec of H.264, and the stream is decoded by the existing reception apparatus 400 that satisfies the H.264 (ITU-T Rec. H.264) standard, the additional information moving image presence information is ignored, and the normal viewing moving image is displayed. It is similar even when the video codec is MPEG2 video (ITU-T Rec. H.262).

On the other hand, the reception apparatus 200 to which the present embodiment is applied correctly decodes even the additional information moving image presence information, and the user can receive services beyond those of the existing reception apparatus 400.

As described above, in the present embodiment, it is possible to add a new function while maintaining compatibility with an existing television set, and user merit is high compared to the case in which it is impossible to view unless repurchased or a moving image has a feeling of strangeness.

<User's Interaction in Reception Apparatus>

In the reception apparatus 200 of the present embodiment, when a program having the additional information moving image is received, at least three displays described below can be selected by the user's setting or instruction on the reception apparatus 200:

1) displaying the normal viewing moving image as usual,
2) screen-displaying the normal viewing moving image and the additional information moving image at the same time, and
3) screen-displaying only the additional information moving image.

In the case of screen-displaying the normal viewing moving image and the additional information moving image at the same time, it may be allowed to change the number of additional information moving images to be displayed, the arrangement or the size thereof on the screen, or the like at the user's request.

The setting for the reception apparatus 200 refers to setting how to display a program having the additional information moving image in advance by an operation of a remote controller or the like. The instruction for the display apparatus 200 refers to changing a method of displaying a program having the additional information moving image immediately by the user's instruction.

Figs. 36, 37, and 38 are flowcharts of the reception apparatus 200 when the additional information moving image SEI added to H.264, the additional information moving image descriptor added to the descriptor of the PMT, and the additional information moving image section added to MPEG2-TS are used, respectively. In the flowcharts, information of the SEI, the descriptor, and the section are decoded, and it is judged whether or not there is an additional information, moving image. When there is an additional information moving images, the parameters of the normal viewing moving image when the additional information moving image is used and the additional information moving image are acquired. The difference among Figs. 36, 37, and 38 is whether the parameters are obtained by decoding the PSI/SI (Figs. 37 and 38) or the are obtained as a decoding result of H.264 (Fig. 36) at the time of demultiplexing of MPEG2-TS. After the parameter acquisition, the user's setting for the reception apparatus is read, and so the moving image output changes according to whether to perform normal display, to perform display using the additional information moving image, or to display both. Here, if the user's setting represents normal display, the normal viewing moving image is output (step S410, step S510, and step S610). Further, when the user's setting represents output of the normal viewing moving image and the additional information moving image, the normal viewing moving image and the additional information moving image are output (step S414, step S514, and step S614). Further, when the user's setting does not represents output of the normal viewing moving image and the additional information moving image, the additional information moving image are output (step S416, step S516, and step S616).

In the present embodiment, the moving image in which the additional information moving image relatively relates to the content of the normal viewing moving image has been illustrated, but even if not particularly related, the present embodiment works effectively.

[2. Second Embodiment] Here, a description will be made in connection with the case in which multinocular stereoscopic content of the mountain landscape is used as an example, a moving image used for multinocular stereoscopic vision is transmitted as the additional information moving image, and the following information has been agreed upon between transmission and reception. However, in the case in which an agreement has not been made, similarly to the first embodiment, the following information may be transmitted:

• the cropping area of the normal viewing moving image at the time of using the additional information moving image,
• the position of the additional information moving image,
• the width and the height of the additional information moving image, and
• the sample aspect ratio of the additional information moving image.

1. Binocular Stereoscopic Moving Image

Here, a case of transmitting a binocular stereoscopic moving image of the multinocular stereoscopic vision using the left-eye moving image as the normal viewing moving image and the right-eye moving image the additional information moving image is considered.

First, moving image compression of the integrated moving image and encoding of the normal view moving image area and the sample aspect ratio may be performed exactly in the same method as the method described in the first embodiment.

As for the additional information moving image presence information, first an agreement to be made between the transmission side and the reception side is considered. The normal viewing moving image and the Additional information moving image are a pair of the binocular moving images and thus are considered to the same property. Thus, it is a natural agreement to divert the parameter of the normal viewing moving image as the parameter of the additional information, moving images.

That is, here it is assumed that the following agreement is made:

(1) the image sizes of the normal viewing moving image and the additional information moving image are the same in width and height, and

(2) the normal viewing moving image and the additional information moving image are the same in sample aspect ratio.

Further, in this embodiment, when the binocular stereoscopic vision is not performed, the left-eye moving image is displayed. It is assumed that the displayed area and the area to be used as the left-eye moving image of the binocular stereoscopic vision are agreed to be the same. That is, the following agreement is made:

(3) the cropping area of the normal viewing moving image at the time of using the additional information moving image is the same as the cropping area of the normal viewing moving image at the time of not using the additional information moving image.

Next, the normal viewing moving image and the additional information moving image are arranged in one frame, but it is considered that, between transmission and reception, the additional information moving image is arranged below the normal viewing moving image, and the cropping start position of the additional information moving image is specified based on the image size of the binocular stereoscopic moving image.

When the cropping position of the additional information moving image is arranged directly after the normal viewing moving image, an arrangement illustrated in Fig. 9 is made, and agreement content illustrated in Fig. 10 is obtained.

In order to avoid a lower section of the left-eye moving image and an upper section of the right-eye moving image being encoded in the same macro block, the right-eye moving image may be arranged with a space from the left-eye moving image as illustrated in Fig. 11, and the agreement content illustrated in Fig. 12 is obtained.

Figs. 10 and 12 illustrate only some of image sizes. However, on all image sizes having a possibility to be transmitted, an agreement is made as illustrated in Figs. 10 and 12, or an agreement is made as in the following calculation formula from the cropping parameter of the normal viewing moving image.

The cropping start position (xa,ya) of the additional information moving image of Fig. 9 starts from immediately below the lowest end line of the normal viewing moving image and thus is as follows:

$$xa = frame\_crop\_left\_offset$$

$$ya = 16 * FrameHeightInMbs - 2 * frame\_crop\_bottom\_offset$$

The image size (w,h) of the additional information moving image is the same as the normal viewing moving image and thus is as follows:

W+PicWidthinSamles-2*frame_crop_left_offset_2*frame_crop_right_offset
h=16*Frame Height InMbs-2*frame_crop_top_offset-2*frame_crop_bottom_offset

Meanwhile, if the cropping position (xa,ya) of Fig. 9 is used, the cropping start position (xb,yb) of the additional information moving image of Fig. 10 is as follows:

$$xb = xa$$

$$yb = ya + (16 - ya\%16)$$

(ya%16 represents the remainder when ya is divided by 16)

Based on the conditions, an agreement is made as follows:

(4) a method of specifying the cropping position of the additional information moving image in the integrated moving image is based on, for example, the table of Fig. 12, and in the case of the image size that is not present in the table, one having the closest height among ones equal to or higher than the height thereof is used.

Through the agreements from (1) to (4), the following information is agreed upon between transmission and reception:

- the cropping area of the normal viewing moving image at the time of using the additional information moving image,
- the position of the additional information moving image
- the width and the height of the additional information moving image, and
- the sample aspect ratio of the additional information moving image,

The agreements can be dealt with by providing the decoding unit 208 of the additional information moving image presence information inside the reception apparatus 200 with a function of specifying the cropping start position and the image size of the additional information moving image based on the cropping parameter of the normal viewing moving image and a function of outputting the sample aspect ratio of the normal viewing moving image as the sample aspect ratio of the additional information moving image.

In this agreement, an agreement has been made on all things handed over as the parameter. Thus, the contents as to whether or not the additional information moving image is present and whether or not the normal viewing moving image and the additional information moving image are a pair of binocular stereoscopic moving images is necessarily transmitted from the transmission apparatus side to the reception apparatus side as the additional information moving image presence information.

For this reason, a code capable of specifying the type of the additional information moving image is transmitted, and when the reception side detects the code, the additional information moving image may be obtained and used according to (1) to (4). Thus, even conventional transmission information may be used as the additional information moving image presence information.

A description will be made below in connection with the case in which the present embodiment is applied to information such as

- the SEI of H.264 (USER_DATA in the case of MPEG2 video),
- the descriptor of the PMT of MPEG2-TS (the descriptor of the PSM in the case oaf MPEG2-PS), or
- the private section of MPEG2-TS,

which have already been described in the first embodiment.

Fig. 16 illustrates the contents when the additional information moving images SEI is newly added to H.264. Since the cropping area of the normal viewing moving image at the time of using the additional information moving image and the area and the sample aspect ratio of the additional information moving image inside the integrated moving image have already been agreed upon between transmission and reception, minimum information necessary as sei_message is only that the type of the additional information moving image is an agreed vertical arrangement binocular stereoscopic vision. This is illustrated as predetermined vertical arrangement binocular stereoscopic vision in Fig. 16. Further, "predetermined binocular stereoscopic vision" may be used, but since there are not only ones arranged up and down but also ones arranged from right to left, "vertical arrangement" is included in the name due to meaning of "being arranged up and down."

When one SEI according to the present embodiment is newly established in H.264, one illustrated in Fig. 16 is derived. However, when the SEI for each type of the additional information moving image is newly established, for example, since it can be judged by the presence of the predetermined vertical arrangement binocular stereoscopic additional information moving image SEI that the integrated moving image has the additional information moving image for vertical arrangement binocular stereoscopic vision, an essential item of information inside sei_message disappears as illustrated in Fig. 17. (Of course, other information may be included.)

Next, Fig. 18 illustrates the contents when the additional information moving image descriptor is newly added to the PMT.

Since the cropping area of the normal viewing moving image at the time of using the additional information moving image and the area and the sample aspect ratio of the additional information moving image inside the integrated moving image have been previously agreed upon between transmission and reception, minimum information necessary as the descriptor is only that the type of the additional information moving image is predetermined vertical arrangement binocular stereoscopic vision.

If the descriptor is prepared for each type of the additional information moving image, information inside the descriptor necessary for the application of the present embodiment disappears as illustrated in Fig. 19.

Fig. 20 illustrates the contents of private_data_byte when transmission of the additional information moving image presence information is added to the private section of MPEG2-TS. Similarly to the descriptor of the PMT, the type of the additional information moving image needs be designated, and at the same time, the PID of the stream of the additional information moving image presence needs be designated.

Even on the private section, if a method of newly adding the private section for each type of the additional information moving image is used, the type of the additional information Moving image can be omitted.

As a result, similarly to the first embodiment, it is possible to obtain the stream in which the integrated moving image, the normal viewing moving image area, the cropping area and the sample aspect ratio of the normal viewing moving image at the time of using the additional information, moving image, and the additional information moving image presence information have been encoded.

When the stream is obtained using the video codec of H.264, when the stream is decoded by the existing reception apparatus, 400 that satisfies the H.264 (ITU-T Rec. H.264) standard, the additional information moving image presence information is ignored, and the normal viewing moving image is displayed. It is similar even when the video codec is MPEG2 video (ITU-T Rec. H.262).

On the other hand, the reception apparatus 200 to which the present embodiment is applied correctly decodes even the additional information moving image presence information through the additional information moving image presence encoding unit 208, and the user can obtain services beyond those of the existing reception apparatus 400 as will described later.

As described above, in the present embodiment, it is possible to add a new function while maintaining compatibility with an existing television set, and user merit is high compared to the case in which viewing is impossible without making a new purchase or a moving image has a strange feeling.

Next, a description will be made in connection with the case of displaying the images illustrated in Figs. 9 and 11 through the reception apparatus 200 according to the present embodiment. When the reception apparatus cannot display the binocular stereoscopic vision, cropping of the normal viewing moving image from the integrated moving image is based on the cropping parameter in the H.264 standard, and the normal viewing moving image is basically displayed to the user.

Since the reception apparatus 200 using the present embodiment can specify the presence, the arrangement, and the sample aspect ratio of the additional information moving image, by installing a function for allowing the user to instruct the right-eye moving image of the additional information moving image to be displayed instead of the left-eye moving image of the normal viewing moving image, it is possible to switch and display the left eye, the right eye, or both.

Figs. 42, 43, and 44 are flowcharts of the reception apparatus 200 when the additional information moving image SEI added to H.264, the additional information moving image descriptor added to the descriptor of the PMT, and the additional information moving image section added to MPEG2-TS are used, respectively. In the flowcharts, information of the SEI, the descriptor, and the section are decoded by the additional information moving image presence information encoding unit 208, and it is judged whether or not there is an additional information moving image. When is an additional information moving image, the of the normal viewing moving when the additional information moving image is used and the additional information moving image are acquired. The difference among Figs. 42, 43, and 44 is whether the parameters are obtained by decoding the PSI/SI (Figs. 43 and 44) or the parameters are obtained as the decoding result of H.264 (Fig. 42) at the time of demultiplexing of MPEG2-TS. After the parameter acquisition, the user's setting for the reception apparatus is read, and it is judged whether to perform normal display or display using the additional information moving image.

In the present embodiment, since the type of the additional information moving image is stereoscopic vision, the reception apparatus that cannot implement stereoscopic vision cannot implement the stereoscopic vision using the normal viewing moving image and the additional information moving image. However, when the user not normal viewing, the user can the moving image that is desired to be displayed from the normal viewing moving image and the additional information moving image. The normal viewing moving image or the additional information moving image is cropped from the decoded integrated moving image according to the selection situation, and the moving image is output according to the user's instruction or setting. As described above, it is possible to switch and display the left eye, the right eye, or both.

Further, when the reception apparatus can display the binocular stereoscopic vision, the binocular stereoscopic vision using the normal viewing moving image and the additional information moving image can be displayed. Since the user does not necessarily desire the binocular stereoscopic vision, it is possible to display only the normal viewing moving image or only the additional information moving image rather than the binocular stereoscopic vision.

Figs. 39, 40, and 41 are flowchart of the reception apparatus 200 when the additional information moving image SEI added to H.264, the additional information moving image descriptor added to the descriptor of the PMT, and the additional information moving image section added to MPEG2-TS are used, respectively. In the flowcharts, information of the SEI, the descriptor, and the section are decoded, and it is judged whether or not there is an additional information moving image. When there is an additional information moving image, the parameters of the normal viewing moving image when the additional information moving image is used and the additional information moving image are acquired. The difference among Figs. 39, 40, and 41 is whether the parameters are obtained by decoding PSI/SI (Figs. 40 and 41) or the parameters are obtained as the decoding result of H.264 (Fig. 39) at the time of demultiplexing of MPEG2-TS. After parameter acquisition, the user's setting for the reception apparatus is read, and it is judged whether to perform normal display or display using the additional information moving image.

When the additional information moving image is used, and the stereoscopic moving image is included in the additional information, it is judged by the user's instruction or setting whether or not the stereoscopic vision is to be performed (step S920). When the stereoscopic vision is not to be performed, the moving image from the normal viewing moving image and the additional information moving image is output (step S722 and step S724). When the Stereoscopic vision is to be performed, moving image output corresponding to each viewpoint is performed to display the stereoscopic vision (step S730, step S830, and step S930). when the type of the additional information moving image is not the stereoscopic vision (No in step S712, step S812, and step S912), similarly to the illustrated in the flowcharts of Figs. 36, 37, and 38, the moving (that may be one moving or one in which a plurality of moving images are combined) from the normal viewing moving image and the additional information moving image is output. Of course, since the reception apparatus can support the stereoscopic vision, if the right-eye moving image and the left-eye moving image are created by shifting the moving image from side to side, it is possible to move the display screen of the output moving image back and forth.

In this example, the normal viewing moving image has been described as the left-eye moving image but may be the right-eye moving image. Further, even if a vertical relationship between the normal viewing moving image and the additional information moving image changes, it can be dealt with by changing the parameters on each moving image.

Similarly to this example, the present invention is effective even when the additional information moving image is arranged beside the normal viewing moving image.

2. Multinocular Stereoscopic Moving image

A lenticular technique or a parallax barrier technique can deal with a moving image of multinocular stereoscopic vision. In this case, for example, stereoscopic vision can be implemented in a first direction using first and second images as left-eye and right-eye images, and stereoscopic vision can be implemented in a second direction different from the first direction using third and fourth images as left-eye and right-eye images. The present embodiment is effective even when the moving image output means employs an image display technique of such a type, and one image of multinocular stereoscopic vision may be used as the normal viewing moving image, and the other images may be dealt with as the additional information moving images.

As a method of performing an agreement between transmission and reception for the arrangement of the additional information moving image, for example, it is agreed to arrange moving images of multinocular stereoscopic vision in a transverse direction, and the number of moving images arranged laterally is calculated based on the width of the integrated moving image and the width of the normal viewing moving image.

The arrangement state of the integrated moving image arranged by this agreement is illustrated in Fig. 13. As another agreement, the number of moving images of multi-eye stereoscopic vision and the arrangement direction (for example, the transverse direction) are decided, and they are sufficiency arranged in the transverse direction, and thereafter, when a moving image remains, it is arranged in the longitudinal direction.

The arrangement state of the integrated moving image arranged by this agreement is illustrated in Fig. 14. Even in Figs. 13 and 14, it is necessary to make an agreement as to whether to leave a space between images. Of course, if two types of a transverse direction arrangement trinocular stereoscopic vision having a space between images and a transverse direction trinocular vision having no space between are prepared as the type of the additional information moving image and transmitted as the additional information moving image presence information, it is possible to select the type of the integrated moving image for all content.

3. Multinocuar Stereoscopic Vision and Other Viewpoint Stereoscopic Moving Image

Further, transmitting a video from another viewpoint as a program is conceivable as described in the first embodiment. Since a main video is a stereoscopic moving image, it is desirable for viewing that the image from another viewpoint also be stereoscopic vision, and thus a description will be made under the assumption that the image from another viewpoint is the stereoscopic moving image. Particularly, the present embodiment is also effective when another viewpoint video is not the stereoscopic moving image.

Fig. 15 illustrates an example of an integrated moving image in which main stereoscopic moving images are arranged in an upper section and supplemental stereoscopic moving images are arranged in a lower section. In the program, the normal viewing moving image is expected to be one of the main stereoscopic moving images. All of the moving images but the normal viewing moving image are the additional information moving images. The normal viewing moving image is not particularly limited to an upper-left arrangement.

An agreement is considered to have been made on the main stereoscopic moving image between transmission and reception similarly to Fig. 13, but not on the supplemental stereoscopic moving image. Fig. 21 illustrates the contents when the additional information moving image SEI is newly added to H.264. The contents of the SEI includes an additional information moving image for predetermined horizontal arrangement trinocular vision that is a main stereoscopic moving image and an additional information moving image for supplemental horizontal arrangement trinocular vision that is a supplemental stereoscopic moving image. The supplemental horizontal arrangement trinocular vision is assumed to be horizontal arrangement trinocular vision, meaning that the normal viewing moving image is not included, and it is merely different from horizontal arrangement trinocular vision.

From a point of view of implementation, it is conceivable to designate the type of the additional information moving image using an ID including the following information in a bit field:

- a bit as to whether or not the normal viewing moving image is to be used,
- a bit as to whether or not the cropping area of the normal viewing moving image at the time of using the additional information moving image has been agreed upon between the transmission side and the reception side,
- a bit as to whether or not the position of the additional information moving image has been agreed upon between the transmission side and the reception side,
- a bit as to whether or not the width and the height of the additional information moving image has been agreed upon between the transmission side and the reception side,
- a bit as to whether or not the sample aspect ratio of the additional information moving image has been upon between the transmission side and the reception side,
- a bit as to whether or not it is stereoscopic vision,
- a bit representing whether or not it is a horizontal arrangement when it is a stereoscopic vision, and
- the number of viewpoints when it is a stereoscopic vision.

In sei_message of Fig. 21, by designating the additional information moving image for predetermined horizontal arrangement trinocular stereoscopic vision, the following information can be specified:

- the cropping area of the normal viewing moving image at the time of using the main additional information moving image,
- the position of the main additional information moving image,
- the width and the height of the main additional information moving image, and
- the sample aspect ratio of the main additional information moving image.

Next, the additional information moving image of supplemental horizontal arrangement trinocular vision is designated, and the position, the width, the height, and the sample aspect ratio of the trinocular additional information moving image are designated. In the case of the trinocular vision, moving images for respective viewpoints can be regarded as the same in the width, the height, and the sample aspect ratio. Thus, in Fig. 21, the width, the height, and the sample aspect ratio have been set once in common, and designation for three eyes has been made on only the cropping start position.

Fig. 26 illustrates the contents when the additional information moving image descriptor is newly added to the descriptor of the PMT. Similarly to the SEI of Fig. 21, by designating the additional information moving image for predetermined horizontal arrangement trinocular stereoscopic vision, the following information can be specified:

- the cropping area of the normal viewing moving image at the time of using the main additional information moving image,
- the position of the main additional information moving image,
- the width and the height of the main additional information moving image, and
- the sample aspect ratio of the main additional information moving image.

Next, by designating the additional information moving image for supplemental horizontal arrangement trinocular vision, the position, the width, the height, and the sample aspect ratio of the additional information moving image for three eyes can be specified.

Fig. 27 illustrates the contents of private_data_byte when transmission of the additional information moving image presence information is added to the private section of MPEG2-TS. It is the same as the designation content of the additional information moving image SEI except for designation of the PID of the stream in which the additional information moving image is present.

Similarly to the SEI of Fig. 21, by designating the additional information moving image for predetermined horizontal arrangement trinocular vision, the following information is specified:

- the cropping area of the normal viewing moving image at the time of using the main additional information moving image,
- the position of the main additional information moving image,
- the width and the height of the main additional information moving image, and
- the sample aspect ratio of the main additional information moving image.

Next, by designating the additional information moving image for supplemental horizontal arrangement trinocular vision, the position, the width, the height, and the sample aspect ratio of the additional information moving image for three eyes can be specified.

It has been described above that the main video is the stereoscopic moving image and the stereoscopic moving image from another viewpoint added as a supplement thereof can be transmitted according to the present embodiment. If the stream of the main/supplemental stereoscopic moving image becomes the stream according to the present embodiment, it is possible to view one main eye as the normal viewing moving image through the existing reception apparatus 400. Further, according to the reception apparatus 200 to which the present embodiment is applied, it is possible to view the monocular moving image of interest or view the main or supplemental stereoscopic moving image from the main/ supplemental stereoscopic moving image.

4. Binocular Stereoscopic Vision Using Additional Information Moving Image Having Image Size Different from Normal Viewing Moving Image

Fig. 31 illustrates a case in which a left-eye moving image of 1440×1080 as the normal viewing moving image and a right-eye moving image of 4800×1080 as the additional information moving image are arranged in the integrated image. Fig. 32 illustrates a case in which a central moving image of 1920×810 as the normal viewing moving image and two images (a left moving image and a right moving image) of 960x270 as the additional information moving image are arranged.

In the present embodiment, when the multinocular stereoscopic moving image is used, all viewpoints need not deal with the same image size, and as illustrated in Figs. 31 and 32, transmission (accumulation) can be performed by increasing an information amount of the normal viewing moving image and decreasing an information amount of the additional information moving image. As a result, it is possible to transmit the multinocular stereoscopic moving image while preventing the normal viewing moving image from deteriorating.

When the muitinocular vision is actually implemented, for example, in stereoscopic vision output by normal+additional information of Fig. 39, a magnification power of the normal viewing moving image and a magnification power of the additional information moving image are different and thus adjusted so that the display sizes of the left and right eyes can be the same. Of course, there is a risk of deterioration of a reproduction image corresponding to a reduction in the information amount of the additional information moving image.

However, in human beings' binocular stereoscopic vision, a correction function is excellent, and a phenomenon in which one image information having a large information amount compensates for other information occurs. For example, even a person whose left and right eyesights are different can see with stereoscopic vision. In fact, it has been conformed vision can be implemented even in a state in which the monocular image is somewhat blurred, and stereoscopic vision can be implemented even with unbalanced left and right moving images of Fig. 39.

Fig. 32 is a moving image for trinocular stereoscopic vision, but since the normal Viewing moving image having a large information amount is used as a central moving image in the integrated moving image, it can be dealt with regardless of whether a moving image having a large information amount is used as a right-eye moving image or a left-eye moving image.

When a moving image having a large information amount is used as the right-eye moving image, the central moving image that is the normal viewing moving image is used for the right eye, and the left-eye moving image of the additional information moving image is used for the left eye. Further, when a moving image having a large information amount is used as the left-eye moving image, the central moving image that is the normal viewing moving image is used for the left eye, and the right-eye moving image of the additional information moving image is used for the right eye. This allows an eye that sees the normal viewing moving image having a large information amount to be selectable according to the user's taste, for example, since the left and right eyesights or fatigue of the left and right eyes' depend on the user.

The arrangement and the image sizes of the normal viewing moving image and the additional information moving image inside the integrated moving image of Figs. 31 and 32 are an example, and the present invention is not limited thereto.

As described above, according to the above described embodiment, the normal viewing moving image can be viewed even by the existing reception apparatus. In the stream created using the present embodiment, if the cropping parameter of the codec can be correctly processed, it is possible to crop the normal viewing moving image from the integrated moving image and display the normal viewing moving image even through the existing reception apparatus.

Further, according to the present embodiment, since it is possible to add a new function while maintaining compatibility with the exiting reception apparatus, a case in which viewing is impossible without making a new purchase or a moving image has a strange feeling does not occur, and the user can receive a new service at a desired switching time. As a result, in the circumstances in which the existing reception apparatus and the reception apparatus that can receive the additional information moving image are mixed, a change to a transmission apparatus of a moving image with an additional information moving image can be made without causing any trouble in the existing reception apparatus. Further, since a change amount from the existing reception apparatus and transmission apparatus is small, the development cost can be reduced, and the price of the transmission apparatus and the reception apparatus using the present embodiment can be reduced.

The preferred embodiments of the present invention have been described above with reference to the accompanying drawing, whilst the present invention is not limited to the above examples, of course. A person skilled in the art may find various alternations and modifications within the scope of the appended claims, and it should be understood that they will naturally come under the technical of the present invention.

Reference Signs List

| | |
|---|---|
| 100 | Transmission apparatus |
| 102 | Moving image compression unit |
| 104 | Normal viewing moving image area encoding unit |
| 106 | Additional information moving image presence information encoding unit |
| 200 | Reception apparatus |
| 202 | Moving image decompression unit |
| 204 | Normal viewing moving image decoding unit |
| 206 | Moving image output unit |
| 208 | Additional information moving image presence information decoding unit |

**Claims**

1. An image transmission method, comprising the steps of:

   compressing an integrated image in which a normal viewing moving image and an additional information moving image are arranged on one frame;
   encoding area information representing an area of the normal viewing moving image;
   encoding presence information representing that the additional information moving image is present; and
   transmitting the integrated image, the area information, and the presence information.

2. The image transmission method according to claim 1, wherein the presence information include information designating a type of the additional information moving image.

3. The image transmission method according to claim 2, wherein information designating, as the type of the additional information moving image, whether or not the additional information moving image is a moving image used for multinocular stereoscopic vision is included.

4. The image transmission method according to claim 1, wherein the presence information includes area information representing an area of the additional information moving image or an aspect ratio of the additional information moving image.

5. The image transmission method according to claim 1, wherein the presence information includes information designating an image area of the normal viewing moving image at the time of using the additional information moving image.

**6.** An image reception method, comprising the steps of:

decompressing an integrated image in which a normal viewing moving image and an additional information moving image are arranged on one frame, the integrated image being transmitted from a transmission side;

decoding area information representing an area of the normal viewing moving image transmitted from the transmission side together with the integrated image;

decoding presence information representing that the additional information transmitted from the transmission side together with the integrated image is present;

designating and displaying an area of the normal viewing moving image based on the area information; and

recognizing presence of the additional information moving image based on the presence information and displaying the additional information moving image.

**7.** An image transmission apparatus, comprising:

a compression unit configured to compress an integrated image in which a normal viewing moving image and an additional information moving image are arranged on one frame;

an area information encoding unit configured to encode area information representing an aren of the normal viewing moving image;

a presence information encoding unit configured to encode presence information representing that the additional information moving image is present; and

a transmission unit configured to transmit the encoded integrated image, the encoded area information, and the encoded presence information.

**8.** An image reception apparatus, comprising:

a decompression unit configured to decompress an integrated image in which a normal viewing moving image and an additional information moving image are arranged on one frame, the integrated image being transmitted from a transmission side;

an area information decoding unit configured to decode area information representing an area of the normal viewing moving image transmitted from the transmission side together with the integrated image;

a presence information decoding unit configured to decode presence information representing that the additional information moving image transmitted from the transmission side together with the integrated image is present; and

an image output unit configured to designate and output an area of the normal viewing moving image based on the area information, recognize presence of the additional information moving image based on the presence information, and output the additional information moving image.

**9.** An image transmission system, comprising:

an image transmission apparatus including a compression unit configured to compress an integrated image in which a normal viewing moving image and an additional information moving image are arranged on one frame, an area information encoding unit configured to encode area information representing an area of the normal viewing moving image, a presence information encoding unit configured to encode presence information representing that the additional information moving image is present, and a transmission unit configured to transmit the encoded integrated image, the encoded area information, and the encoded presence information; and

an image reception apparatus including a decompression unit configured to decompress an integrated image in which a normal viewing moving image and an additional information moving image are arranged on one frame, the integrated image being transmitted from a transmission side, an area information decoding unit configured to decode area information representing an area of the normal viewing moving image transmitted from the transmission side together with the integrated image, a presence information decoding unit configured to decode presence information representing that the additional information moving image transmitted from the transmission side together with the integrated image is present, and an image output unit configured to designate and output an area of the normal viewing moving image based on the area information, recognize presence of the additional information moving image based on the presence information, and output the additional information moving image.

FIG.1

NORMAL VIEWING MOVING IMAGE

ADDITIONAL INFORMATION MOVING IMAGE 1

ADDITIONAL INFORMATION MOVING IMAGE 2

1920

960

720

1080

480

480

EP 2 381 690 A1

# FIG.2

| | UPPER LEFT END POINT | WIDTH AND HEIGHT | sample aspect ratio |
|---|---|---|---|
| NORMAL VIEWING MOVING IMAGE | (0,0) | (960,1080) | 2 : 1 |
| ADDITIONAL INFORMATION MOVING IMAGE 1 | (960,0) | (720,480) | 40 : 33 |
| ADDITIONAL INFORMATION MOVING IMAGE 2 | (960,480) | (720,480) | 40 : 33 |
| INTEGRATED MOVING IMAGE | (0,0) | (1920,1080) | — |

# FIG.3

| chroma_format_idc | Chroma Format | SubWidthC | SubHeightC |
|:---:|:---:|:---:|:---:|
| 0 | monochrome | — | — |
| 1 | 4 : 2 : 0 | 2 | 2 |
| 2 | 4 : 2 : 2 | 2 | 1 |
| 3 | 4 : 4 : 4 | 1 | 1 |

FIG.4

PMT

STREAM INFORMATION
· · ·
· ·

stream_type
elementary_PID
descriptor
· ·
· ·

· ·
AC-3 descriptor
· · ·

# FIG.5

```
            ┌─────────────────┐
            │        ⋮        │
            ├─────────────────┤
            │   stream_type   │
┌────────┐  ├─────────────────┤
│  PMT   │  │  elementary_PID │
└────────┘  ├─────────────────┤
            │   descriptor    │
      ┌──────────────────┐    │        ⋮        │
      │        ⋮        │    └─────────────────┘
      ├──────────────────┤
      │STREAM INFORMATION│
      ├──────────────────┤        ┌──────────────────────┐
      │        ⋮        │        │          ⋮          │
      └──────────────────┘        ├──────────────────────┤
                                  │ ADDITIONAL INFORMATION│
                                  │    MOVING IMAGE      │
                                  │     DESCRIPTOR       │
                                  ├──────────────────────┤
                                  │          ⋮          │
                                  └──────────────────────┘
```

## FIG.6

| ADDITIONAL INFORMATION MOVING IMAGE DESCRIPTOR |
|---|

| ⋮ |
|---|
| WIDTH AND HEIGHT (w,h) OF NORMAL VIEWING MOVING IMAGE |
| CROPPING START POSITION (x,y) OF NORMAL VIEWING MOVING IMAGE |
| TYPE OF ADDITIONAL INFORMATION MOVING IMAGE 1=NON-STEREOSCOPIC VISION |
| WIDTH AND HEIGHT (w,h) OF ADDITIONAL INFORMATION MOVING IMAGE 1 |
| SAMPLE ASPECT RATIO OF ADDITIONAL INFORMATION MOVING IMAGE 1 |
| CROPPING START POSITION (x,y) OF ADDITIONAL INFORMATION MOVING IMAGE 1 |
| TYPE OF ADDITIONAL INFORMATION MOVING IMAGE 2=NON-STEREOSCOPIC VISION |
| WIDTH AND HEIGHT (w,h) OF ADDITIONAL INFORMATION MOVING IMAGE 2 |
| SAMPLE ASPECT RATIO OF ADDITIONAL INFORMATION MOVING IMAGE 2 |
| CROPPING START POSITION (x,y) OF ADDITIONAL INFORMATION MOVING IMAGE 2 |
| ⋮ |

EP 2 381 690 A1

## FIG.7

ADDITIONAL INFORMATION MOVING IMAGE SEI

sei_message

⋮

WIDTH AND HEIGHT (w,h) OF NORMAL VIEWING MOVING IMAGE

CROPPING START POSITION (x,y) OF NORMAL VIEWING MOVING IMAGE

TYPE OF ADDITIONAL INFORMATION MOVING IMAGE 1=NON-STEREOSCOPIC VISION

WIDTH AND HEIGHT (w,h) OF ADDITIONAL INFORMATION MOVING IMAGE 1

SAMPLE ASPECT RATIO OF ADDITIONAL INFORMATION MOVING IMAGE 1

CROPPING START POSITION (x,y) OF ADDITIONAL INFORMATION MOVING IMAGE 1

TYPE OF ADDITIONAL INFORMATION MOVING IMAGE 2=NON-STEREOSCOPIC VISION

WIDTH AND HEIGHT (w,h) OF ADDITIONAL INFORMATION MOVING IMAGE 2

SAMPLE ASPECT RATIO OF ADDITIONAL INFORMATION MOVING IMAGE 2

CROPPING START POSITION (x,y) OF ADDITIONAL INFORMATION MOVING IMAGE 2

⋮

FIG.8

EP 2 381 690 A1

| ADDITIONAL INFORMATION MOVING IMAGE PRIVATE_SECTION |

| private_data_byte |

| ⋮ |
| PID OF ADDITIONAL INFORMATION MOVING IMAGE PRESENCE STREAM |
| WIDTH AND HEIGHT (w,h) OF NORMAL VIEWING MOVING IMAGE |
| CROPPING START POSITION (x,y) OF NORMAL VIEWING MOVING IMAGE |
| TYPE OF ADDITIONAL INFORMATION MOVING IMAGE 1=NON-STEREOSCOPIC VISION |
| WIDTH AND HEIGHT (w,h) OF ADDITIONAL INFORMATION MOVING IMAGE 1 |
| SAMPLE ASPECT RATIO OF ADDITIONAL INFORMATION MOVING IMAGE 1 |
| CROPPING START POSITION (x,y) OF ADDITIONAL INFORMATION MOVING IMAGE 1 |
| TYPE OF ADDITIONAL INFORMATION MOVING IMAGE 2=NON-STEREOSCOPIC VISION |
| WIDTH AND HEIGHT (w,h) OF ADDITIONAL INFORMATION MOVING IMAGE 2 |
| SAMPLE ASPECT RATIO OF ADDITIONAL INFORMATION MOVING IMAGE 2 |
| CROPPING START POSITION (x,y) OF ADDITIONAL INFORMATION MOVING IMAGE 2 |
| ⋮ |

## FIG.9

NORMAL VIEWING MOVING IMAGE

ADDITIONAL INFORMATION MOVING IMAGE

## FIG.10

| NORMAL VIEWING MOVING IMAGE | | | ADDITIONAL INFORMATION MOVING IMAGE | | |
| --- | --- | --- | --- | --- | --- |
| CROPPING START POSITION | IMAGE SIZE | sample aspect ratio | CROPPING START POSITION | IMAGE SIZE | sample aspect ratio |
| (0,0) | 1920x960 | 1:2 | (0,960) | 1920x960 | 1:2 |
| (0,0) | 1280x360 | 1:2 | (0,360) | 1280x360 | 1:2 |
| (0,0) | 720x480 | 40:33 | (0,480) | 720x480 | 40:33 |
| (0,0) | 720x576 | 16:11 | (0,576) | 720x576 | 16:11 |

EP 2 381 690 A1

## FIG.11

NORMAL VIEWING MOVING IMAGE

ADDITIONAL INFORMATION MOVING IMAGE

# FIG.12

| NORMAL VIEWING MOVING IMAGE | | | ADDITIONAL INFORMATION MOVING IMAGE | | |
|---|---|---|---|---|---|
| CROPPING START POSITION | IMAGE SIZE | sample aspect ratio | CROPPING START POSITION | IMAGE SIZE | sample aspect ratio |
| (0,0) | 1920x960 | 1:2 | (0,544) | 1920x540 | 1:2 |
| (0,0) | 1280x360 | 1:2 | (0,368) | 1280x360 | 1:2 |
| (0,0) | 720x480 | 40:33 | (0,480) | 720x480 | 40:33 |
| (0,0) | 720x576 | 16:11 | (0,576) | 720x576 | 16:11 |

## FIG.13

MULTINOCULAR STEREOSCOPIC MOVING IMAGE

## FIG.14

MULTINOCULAR STEREOSCOPIC MOVING IMAGE

# FIG.15

MAIN STEREOSCOPIC MOVING IMAGE

SUPPLEMENTAL STEREOSCOPIC MOVING IMAGE

FIG. 16

| ADDITIONAL INFORMATION MOVING IMAGE SEI |
| --- |

| . . . | sei_message | . . . |
| --- | --- | --- |

| . . . | TYPE OF ADDITIONAL INFORMATION MOVING IMAGE =PREDETERMINED VERTICAL ARRANGEMENT BINOCULAR VISION | . . . |
| --- | --- | --- |

FIG.17

36

PREDETERMINED VERTICAL ARRANGEMENT
BINOCULAR VISION ADDITIONAL
INFORMATION MOVING IMAGE SEI

sei_message

FIG. 18

| ADDITIONAL INFORMATION MOVING IMAGE DESCRIPTOR |
| --- |

| TYPE OF ADDITIONAL INFORMATION MOVING IMAGE = PREDETERMINED VERTICAL ARRANGEMENT BINOCULAR VISION |
| --- |
| ... |

FIG.19

PREDETERMINED VERTICAL ARRANGEMENT
BINOCULAR VISION ADDITIONAL INFORMATION
MOVING IMAGE DESCRIPTOR

# FIG.20

ADDITIONAL INFORMATION MOVING IMAGE PRIVATE_SECTION

private_data_byte

PID OF ADDITIONAL INFORMATION MOVING IMAGE PRESENCE STREAM

TYPE OF ADDITIONAL INFORMATION MOVING IMAGE =PREDETERMINED VERTICAL ARRANGEMENT BINOCULAR VISION

# FIG.21

ADDITIONAL INFORMATION MOVING IMAGE SEI → sei_message

| |
|---|
| ⋮ |
| TYPE OF ADDITIONAL INFORMATION MOVING IMAGE 1=PREDETERMINED HORIZONTAL ARRANGEMENT TRINOCULAR VISION |
| TYPE OF ADDITIONAL INFORMATION MOVING IMAGE 2=SUPPLEMENTAL HORIZONTAL ARRANGEMENT TRINOCULAR VISION |
| WIDTH AND HEIGHT (w,h) OF ADDITIONAL INFORMATION MOVING IMAGE 2 |
| SAMPLE ASPECT RATIO OF ADDITIONAL INFORMATION MOVING IMAGE 2 |
| CROPPING START POSITION 1(x,y) OF ADDITIONAL INFORMATION MOVING IMAGE 2 |
| CROPPING START POSITION 2(x,y) OF ADDITIONAL INFORMATION MOVING IMAGE 2 |
| CROPPING START POSITION 3(x,y) OF ADDITIONAL INFORMATION MOVING IMAGE 2 |
| ⋮ |

FIG.22

100

TRANSMISSION APPARATUS

| NORMAL VIEWING MOVING IMAGE +ADDITIONAL INFORMATION MOVING IMAGE | TYPE (+AREA) OF ADDITIONAL INFORMATION MOVING PICTURE |

NORMAL VIEWING MOVING IMAGE AREA ASPECT RATIO

NORMAL VIEWING MOVING IMAGE AREA AT TIME OF USING ADDITIONAL INFORMATION

102

MOVING IMAGE COMPRESSION UNIT

104

NORMAL VIEWING MOVING IMAGE AREA ENCODING UNIT

106

ADDITIONAL INFORMATION MOVING IMAGE PRESENCE INFORMATION ENCODING UNIT

TRANSMISSION (ACCUMULATION) SYSTEM

FIG.23

EXISTING TRANSMISSION APPARATUS

NORMAL VIEWING MOVING IMAGE
+ADDITIONAL INFORMATION MOVING IMAGE

NORMAL VIEWING MOVING
IMAGE AREA ASPECT RATIO

102

MOVING IMAGE COMPRESSION UNIT

104

NORMAL VIEWING MOVING IMAGE AREA
ENCODING UNIT

TRANSMISSION (ACCUMULATION) SYSTEM

## FIG.24

```
┌─────────────────────────────────────────────────────────────────────────┐
│                          RECEPTION APPARATUS                              │
│                                                                           │
│  ┌────────────────────────────────────────────┐    ┌──────────────────┐ │
│  │  TRANSMISSION (ACCUMULATION) SYSTEM         │    │  USER SETTING    │ │
│  └────────────────────────────────────────────┘    └──────────────────┘ │
│                          202                                              │
│  ┌──────────────────────────────┐                                        │
│  │  MOVING IMAGE                │                                        │
│  │  DECOMPRESSION UNIT          │                                        │
│  └──────────────────────────────┘                                        │
│                          204                                              │
│         ┌──────────────────────────────────┐                             │
│         │  NORMAL VIEWING MOVING           │                             │
│         │  IMAGE AREA DECODING UNIT        │                             │
│         └──────────────────────────────────┘                             │
│                                                         208               │
│              ┌───────────────────────────────────────────────┐           │
│              │ ADDITIONAL INFORMATION MOVING IMAGE           │           │
│              │ PRESENCE INFORMATION DECODING UNIT            │           │
│              └───────────────────────────────────────────────┘           │
│    206                                                                    │
│  ┌─────────────────────────────────────────────────────────────────────┐ │
│  │              MOVING IMAGE OUTPUT UNIT                                │ │
│  └─────────────────────────────────────────────────────────────────────┘ │
│                                                                           │
│                    ┌──────────────────────┐                               │
│                    │   MOVING IMAGE       │                               │
│                    └──────────────────────┘                               │
└───────────────────────────────────────────────────────────────────────────┘
```

## FIG.25

400

**EXISTING RECEPTION APPARATUS**

TRANSMISSION (ACCUMULATION) SYSTEM

202

MOVING IMAGE EXPANSION UNIT

204

NORMAL VIEWING MOVING MAGE
AREA DECODING UNIT

ADDITIONAL INFORMATION MOVING
IMAGE PRESENCE INFORMATION IS IGNORED

INTEGRATED
MOVING IMAGE

EFFECTIVE

206

MOVING IMAGE OUTPUT UNIT

NORMAL VIEWING MOVING IMAGE

MOVING IMAGE

FIG.26

| |
|---|
| ⋮ |
| TYPE OF ADDITIONAL INFORMATION MOVING IMAGE 1<br>=PREDETERMINED HORIZONTAL ARRANGEMENT TRINOCULAR VISION |
| TYPE OF ADDITIONAL INFORMATION MOVING IMAGE 2<br>=SUPPLEMENTAL HORIZONTAL ARRANGEMENT TRINOCULAR VISION |
| WIDTH AND HEIGHT (w,h) OF ADDITIONAL INFORMATION MOVING IMAGE 2 |
| SAMPLE ASPECT RATIO OF ADDITIONAL INFORMATION MOVING IMAGE 2 |
| CROPPING START POSITION 1(x,y) OF ADDITIONAL INFORMATION MOVING IMAGE 2 |
| CROPPING START POSITION 2(x,y) OF ADDITIONAL INFORMATION MOVING IMAGE 2 |
| CROPPING START POSITION 3(x,y) OF ADDITIONAL INFORMATION MOVING IMAGE 2 |
| ⋮ |

ADDITIONAL INFORMATION
MOVING IMAGE DESCRIPTOR

EP 2 381 690 A1

FIG.27

EP 2 381 690 A1

ADDITIONAL INFORMATION
MOVING IMAGE
PRIVATE_SECTION

private_data_byte

| |
|---|
| ⋮ |
| PID OF ADDITIONAL INFORMATION MOVING IMAGE PRESENCE STREAM |
| TYPE OF ADDITIONAL INFORMATION MOVING IMAGE 1 =PREDETERMINED HORIZONTAL ARRANGEMENT TRINOCULAR VISION |
| TYPE OF ADDITIONAL INFORMATION MOVING IMAGE 2 =SUPPLEMENTAL HORIZONTAL ARRANGEMENT TRINOCULAR VISION |
| WIDTH AND HEIGHT (w,h) OF ADDITIONAL INFORMATION MOVING IMAGE 2 |
| SAMPLE ASPECT RATIO OF ADDITIONAL INFORMATION MOVING IMAGE 2 |
| CROPPING START POSITION 1(x,y) OF ADDITIONAL INFORMATION MOVING IMAGE 2 |
| CROPPING START POSITION 2(x,y) OF ADDITIONAL INFORMATION MOVING IMAGE 2 |
| CROPPING START POSITION 3(x,y) OF ADDITIONAL INFORMATION MOVING IMAGE 2 |
| ⋮ |

**FIG.28**

NORMAL VIEWING MOVING IMAGE

ADDITIONAL INFORMATION MOVING IMAGE

**FIG.29**

NORMAL VIEWING MOVING IMAGE　　ADDITIONAL INFORMATION MOVING IMAGE

## FIG.30

NORMAL VIEWING MOVING IMAGE

## FIG.31

NORMAL VIEWING MOVING IMAGE       ADDITIONAL INFORMATION MOVING IMAGE

FIG.32

NORMAL VIEWING MOVING IMAGE

ADDITIONAL INFORMATION MOVING IMAGE

ADDITIONAL INFORMATION MOVING IMAGE

## FIG.33

```
                    ┌─────────┐
                    │  start  │
                    └─────────┘
                         │
                         ▼
┌───────────────────────────────────────────────────┐
│   SET ASPECT_RATIO_IDC AND CROPPING PARAMETER      │──S100
│        OF NORMAL VIEWING MOVING IMAGE              │
└───────────────────────────────────────────────────┘
                         │
                         ▼
┌───────────────────────────────────────────────────┐
│ SET CROPPING PARAMETER OF NORMAL VIEWING MOVING    │
│ IMAGE AT TIME OF USING ADDITIONAL INFORMATION      │
│ MOVING IMAGE AND SAMPLE ASPECT RATIO, UPPER LEFT   │──S102
│ END POINT, WIDTH, AND HEIGHT OF ADDITIONAL         │
│ INFORMATION MOVING IMAGE AS ADDITIONAL             │
│ INFORMATION MOVING IMAGE SEI                       │
└───────────────────────────────────────────────────┘
                         │
                         ▼
┌───────────────────────────────────────────────────┐
│        H.264 ENCODE INTEGRATED MOVING IMAGE        │──S104
└───────────────────────────────────────────────────┘
                         │
                         ▼
┌───────────────────────────────────────────────────┐
│  MULTIPLEX, FOR EXAMPLE, VOICE/PMT THROUGH MPEG2-TS │──S106
└───────────────────────────────────────────────────┘
                         │
                         ▼
                    ┌─────────┐
                    │   end   │
                    └─────────┘
```

FIG.34

```
                        ┌─────────┐
                        │  start  │
                        └────┬────┘
                             ▼
┌─────────────────────────────────────────────────────────┐
│  SET ASPECT_RATIO_IDC AND CROPPING PARAMETER             │──S200
│       OF NORMAL VIEWING MOVING IMAGE                     │
└──────────────────────────┬──────────────────────────────┘
                           ▼
┌─────────────────────────────────────────────────────────┐
│  SET CROPPING PARAMETER OF NORMAL VIEWING MOVING IMAGE   │
│  AT TIME OF USING ADDITIONAL INFORMATION MOVING IMAGE    │──S202
│  AND SAMPLE ASPECT RATIO, UPPER LEFT END POINT, WIDTH,   │
│  AND HEIGHT OF ADDITIONAL INFORMATION MOVING IMAGE       │
│  AS ADDITIONAL INFORMATION MOVING IMAGE DESCRIPTOR OF PMT│
└──────────────────────────┬──────────────────────────────┘
                           ▼
┌─────────────────────────────────────────────────────────┐
│        H.264 ENCODE INTEGRATED MOVING IMAGE             │──S204
└──────────────────────────┬──────────────────────────────┘
                           ▼
┌─────────────────────────────────────────────────────────┐
│  MULTIPLEX, FOR EXAMPLE, VOICE/PMT THROUGH MPEG2-TS     │──S206
└──────────────────────────┬──────────────────────────────┘
                           ▼
                      ┌─────────┐
                      │   end   │
                      └─────────┘
```

FIG.35

```
                        ( start )
                            |
                            v
+-----------------------------------------------------------+
|   SET ASPECT_RATIO_IDC AND CROPPING PARAMETER             |——S300
|   OF NORMAL VIEWING MOVING IMAGE                          |
+-----------------------------------------------------------+
                            |
                            v
+-----------------------------------------------------------+
|   SET PID, CROPPING PARAMETER OF NORMAL VIEWING MOVING IMAGE|
|   AT TIME OF USING ADDITIONAL INFORMATION MOVING IMAGE     |——S302
|   AND SAMPLE ASPECT RATIO, UPPER LEFT END POINT, WIDTH,    |
|   AND HEIGHT OF ADDITIONAL INFORMATION MOVING IMAGE        |
|   AS ADDITIONAL INFORMATION MOVING IMAGE SECTION           |
+-----------------------------------------------------------+
                            |
                            v
+-----------------------------------------------------------+
|   H.264 ENCODE OF INTEGRATED MOVING IMAGE                 |——S304
+-----------------------------------------------------------+
                            |
                            v
+-----------------------------------------------------------+
|   MULTIPLEX, FOR EXAMPLE, OTHER VOICE/PMT OF ADDITIONAL    |——S306
|   INFORMATION MOVING IMAGE SECTION THROUGH MPEG2-TS        |
+-----------------------------------------------------------+
                            |
                            v
                        ( end )
```

## FIG.36

```
                    start

                      ↓

    DEMULTIPLEXING OF MPEG2-TS          — S400

                      ↓

    H.264 DECODING OF INTEGRATED        — S402
          MOVING IMAGE

                      ↓

       DECODING OF ADDITIONAL           — S404
    INFORMATION MOVING IMAGE SEI

                      ↓

        READING OF USER'S               — S406
     INSTRUCTION OR SETTING

                      ↓
                    S408
                                    Yes
         NORMAL DISPLAY? ─────────────────────┐         S410
                                               ↓
                 │ No                  NORMAL VIEWING MOVING
                 ↓                        IMAGE OUTPUT
               S412                             │
                                    No          │
       NORMAL & ADDITIONAL ─────────────────┐   │
     INFORMATION DISPLAY?                    │   │
                                            │   │
           │ Yes    S414                    │ S416
           ↓                                ↓
  NORMAL VIEWING MOVING IMAGE      ADDITIONAL INFORMATION MOVING
    & ADDITIONAL INFORMATION              IMAGE OUTPUT
       MOVING IMAGE OUTPUT                      │
           │                                    │
           ↓                                    │
          end ←─────────────────────────────────┘
```

## FIG.37

```
                    ( start )
                        |
                        v
   +-----------------------------------------+ —S500
   |     DEMULTIPLEXING OF MPEG2-TS          |
   +-----------------------------------------+
                        |
                        v
   +-----------------------------------------+ —S502
   |  DECODING OF ADDITIONAL INFORMATION     |
   |    MOVING IMAGE DESCRIPTOR OF PMT        |
   +-----------------------------------------+
                        |
                        v
   +-----------------------------------------+ —S504
   |     H.264 DECODING OF INTEGRATED         |
   |           MOVING IMAGE                    |
   +-----------------------------------------+
                        |
                        v
   +-----------------------------------------+ —S506
   |     READING OF USER'S INSTRUCTION        |
   |             OR SETTING                    |
   +-----------------------------------------+
                        |
                        v        S508
                   / NORMAL  \        Yes           +--------------------------+ S510
                  <  DISPLAY?  >------------------->| NORMAL VIEWING MOVING    |
                   \         /                       |     IMAGE OUTPUT         |
                        |                            +--------------------------+
                        | No                                      |
                        v        S512                             |
              / NORMAL & ADDITIONAL \      No                     |
             <  INFORMATION DISPLAY?  >---------+                 |
              \                      /          |                 |
                        |                       |                 |
                        | Yes   S514            v  S516           |
                        v                                         |
   +----------------------------+      +--------------------------+
   | NORMAL VIEWING MOVING IMAGE|      | ADDITIONAL INFORMATION    |
   |   & ADDITIONAL INFORMATION |      |    MOVING IMAGE OUTPUT    |
   |     MOVING IMAGE OUTPUT    |      +--------------------------+
   +----------------------------+
                        |
                        v
                    ( end )
```

# FIG.38

```
                    ┌─────────┐
                    │  start  │
                    └─────────┘
                         │
                         ▼
        ┌──────────────────────────────────┐
        │    DEMULTIPLEXING OF MPEG2-TS     │──── S600
        └──────────────────────────────────┘
                         │
                         ▼
        ┌──────────────────────────────────┐
        │ DECODING OF ADDITIONAL INFORMATION│──── S602
        │        MOVING IMAGE SECTION       │
        └──────────────────────────────────┘
                         │
                         ▼
        ┌──────────────────────────────────┐
        │   H.264 DECODING OF INTEGRATED    │──── S604
        │           MOVING IMAGE            │
        └──────────────────────────────────┘
                         │
                         ▼
        ┌──────────────────────────────────┐
        │    READING OF USER'S INSTRUCTION  │──── S606
        │             OR SETTING            │
        └──────────────────────────────────┘
                         │
                      S608│
                         ▼
                  ◇ NORMAL DISPLAY? ◇───Yes───┐
                         │                     │                      S610
                       No│                     ▼
                         │          ┌──────────────────────────┐
                      S612│          │  NORMAL VIEWING MOVING    │
                         ▼          │      IMAGE OUTPUT         │
              ◇ NORMAL & ADDITIONAL ◇──No──┐   └──────────────────────────┘
              ◇ INFORMATION DISPLAY? ◇     │              │
                         │                 │              │
                      Yes│  S614           │              │   S616
                         ▼                 ▼              │
        ┌──────────────────────────┐  ┌──────────────────────────┐
        │ NORMAL VIEWING MOVING IMAGE│  │  ADDITIONAL INFORMATION   │
        │   & ADDITIONAL INFORMATION │  │    MOVING IMAGE OUTPUT    │
        │      MOVING IMAGE OUTPUT   │  └──────────────────────────┘
        └──────────────────────────┘              │
                         │                         │
                         ▼◄────────────────────────┘
                    ┌─────────┐
                    │   end   │
                    └─────────┘
```

## FIG.39

```
                    ( start )
                        |
                        v
        ┌───────────────────────────────┐
        │  DEMULTIPLEXING OF MPEG2-TS    │──S700
        └───────────────────────────────┘
                        |
                        v
        ┌───────────────────────────────┐
        │       H.264 DECODING OF        │──S702
        │    INTEGRATED MOVING IMAGE     │
        └───────────────────────────────┘
                        |
                        v
        ┌───────────────────────────────┐
        │    DECODING OF ADDITIONAL      │──S704
        │ INFORMATION MOVING IMAGE SEI   │
        └───────────────────────────────┘
                        |
                        v
        ┌───────────────────────────────┐
        │      READING OF USER'S         │──S706
        │   INSTRUCTION OR SETTING       │
        └───────────────────────────────┘
                        |
                    S708 v
```

S708 NORMAL DISPLAY? — Yes → S710 NORMAL VIEWING MOVING IMAGE OUTPUT

No → S712 IS ADDITIONAL INFORMATION TYPE STEREOSCOPIC VISION? — No → S714 NORMAL & ADDITIONAL INFORMATION DISPLAY? — Yes → S718 NORMAL & ADDITIONAL INFORMATION MOVING IMAGE OUTPUT

S714 No → S716 ADDITIONAL INFORMATION MOVING IMAGE OUTPUT

S712 Yes → S720 STEREOSCOPIC VISION? — No → S722 NORMAL/ADDITIONAL INFORMATION DISPLAY SELECTION → S724 SELECTED MOVING IMAGE OUTPUT

S720 Yes → S726 NORMAL & ADDITIONAL INFORMATION DISPLAY? — No → S728 STEREOSCOPIC VISION OUTPUT BY ADDITIONAL INFORMATION

S726 Yes → S730 STEREOSCOPIC VISION OUTPUT BY NORMAL+ADDITIONAL INFORMATION

( end )

FIG.40

```
                        ┌─────────┐
                        │  start  │
                        └────┬────┘
                             ▼
        ┌────────────────────────────────────────┐   S900
        │    DEMULTIPLEXING OF MPEG2-TS           │
        └────────────────────┬───────────────────┘
                             ▼
        ┌────────────────────────────────────────┐   S902
        │   DECODING OF ADDITIONAL INFORMATION    │
        │   MOVING IMAGE DESCRIPTOR OF PMT        │
        └────────────────────┬───────────────────┘
                             ▼
        ┌────────────────────────────────────────┐   S904
        │    H.264 DECODING OF INTEGRATED         │
        │    MOVING IMAGE                         │
        └────────────────────┬───────────────────┘
                             ▼
        ┌────────────────────────────────────────┐   S906
        │        READING OF USER'S                │
        │     INSTRUCTION OR SETTING              │
        └────────────────────┬───────────────────┘
                             ▼   S908
```

- DEMULTIPLEXING OF MPEG2-TS — S900
- DECODING OF ADDITIONAL INFORMATION MOVING IMAGE DESCRIPTOR OF PMT — S902
- H.264 DECODING OF INTEGRATED MOVING IMAGE — S904
- READING OF USER'S INSTRUCTION OR SETTING — S906

S908 NORMAL DISPLAY? — Yes → S910 NORMAL VIEWING MOVING IMAGE OUTPUT

No

S912 IS ADDITIONAL INFORMATION TYPE STEREOSCOPIC VISION? — No → S914 NORMAL & ADDITIONAL INFORMATION DISPLAY? — Yes → S918 NORMAL & ADDITIONAL INFORMATION MOVING IMAGE OUTPUT

No → S916 ADDITIONAL INFORMATION MOVING IMAGE OUTPUT

Yes

S920 STEREOSCOPIC VISION? — No → S922 NORMAL/ADDITIONAL INFORMATION DISPLAY SELECTION → S924 SELECTED MOVING IMAGE OUTPUT

Yes

S926 NORMAL & ADDITIONAL INFORMATION DISPLAY? — No → S928 STEREOSCOPIC VISION OUTPUT BY ADDITIONAL INFORMATION

Yes → S930 STEREOSCOPIC VISION OUTPUT BY NORMAL+ADDITIONAL INFORMATION

end

57

FIG.41

start

DEMULTIPLEXING OF MPEG2-TS — S800

DECODING OF ADDITIONAL INFORMATION MOVING IMAGE SECTION — S802

H.264 DECODING OF INTEGRATED MOVING IMAGE — S804

READING OF USER'S INSTRUCTION OR SETTING — S806

S808
NORMAL DISPLAY? — Yes

No

S810
NORMAL VIEWING MOVING IMAGE OUTPUT

S812
IS ADDITIONAL INFORMATION TYPE STEREOSCOPIC VISION? — No

Yes

S814
NORMAL & ADDITIONAL INFORMATION DISPLAY? — Yes

No

S818
NORMAL & ADDITIONAL INFORMATION MOVING IMAGE OUTPUT

S816
ADDITIONAL INFORMATION MOVING IMAGE OUTPUT

S820
STEREOSCOPIC VISION? — No

Yes

S822
NORMAL/ADDITIONAL INFORMATION DISPLAY SELECTION

S824
SELECTED MOVING IMAGE OUTPUT

S826
NORMAL & ADDITIONAL INFORMATION DISPLAY? — No

Yes

S828
STEREOSCOPIC VISION OUTPUT BY ADDITIONAL INFORMATION

S830
STEREOSCOPIC VISION OUTPUT BY NORMAL+ADDITIONAL INFORMATION

end

58

## FIG.42

```
                        ┌─────────┐
                        │  start  │
                        └────┬────┘
                             │
              ┌──────────────▼──────────────┐
              │ DEMULTIPLEXING OF MPEG2-TS   │──S900
              └──────────────┬──────────────┘
                             │
              ┌──────────────▼──────────────┐
              │    H.264 DECODING OF         │──S902
              │  INTEGRATED MOVING IMAGE     │
              └──────────────┬──────────────┘
                             │
              ┌──────────────▼──────────────┐
              │  DECODING OF ADDITIONAL      │──S904
              │ INFORMATION MOVING IMAGE SEI │
              └──────────────┬──────────────┘
                             │
              ┌──────────────▼──────────────┐
              │     READING OF USER'S        │──S906
              │  INSTRUCTION OR SETTING      │
              └──────────────┬──────────────┘
                             │
                          S908
```

NORMAL DISPLAY? — Yes → S910 NORMAL VIEWING MOVING IMAGE OUTPUT

No

S912 IS ADDITIONAL INFORMATION TYPE STEREOSCOPIC VISION? — No → S914 NORMAL & ADDITIONAL INFORMATION DISPLAY? — Yes → S918 NORMAL VIEWING MOVING IMAGE & ADDITIONAL INFORMATION MOVING IMAGE OUTPUT

Yes — S920 NORMAL/ADDITIONAL INFORMATION DISPLAY SELECTION

No → S916 ADDITIONAL INFORMATION MOVING IMAGE OUTPUT

SELECTED MOVING IMAGE OUTPUT — S922

end

## FIG.43

start

DEMULTIPLEXING OF MPEG2-TS — S900

DECODING OF ADDITIONAL INFORMATION MOVING IMAGE DESCRIPTOR OF PMT — S902

H.264 DECODING OF INTEGRATED MOVING IMAGE — S904

READING OF USER'S INSTRUCTION OR SETTING — S906

S908 NORMAL DISPLAY?

Yes → S910 NORMAL VIEWING MOVING IMAGE OUTPUT

No

S912 IS ADDITIONAL INFORMATION TYPE STEREOSCOPIC VISION?

No → S914 NORMAL & ADDITIONAL INFORMATION DISPLAY?

Yes → S920 NORMAL/ADDITIONAL INFORMATION DISPLAY SELECTION

SELECTED MOVING IMAGE OUTPUT — S922

S914 Yes → S918 NORMAL VIEWING MOVING IMAGE & ADDITIONAL INFORMATION MOVING IMAGE OUTPUT

S914 No → S916 ADDITIONAL INFORMATION MOVING IMAGE OUTPUT

end

## FIG.44

```
                    ( start )
                        │
                        ▼
        ┌───────────────────────────────┐
        │  DEMULTIPLEXING OF MPEG2-TS    │──── S1000
        └───────────────────────────────┘
                        │
                        ▼
        ┌───────────────────────────────┐
        │   DECODING OF ADDITIONAL       │──── S1002
        │ INFORMATION MOVING IMAGE SECTION│
        └───────────────────────────────┘
                        │
                        ▼
        ┌───────────────────────────────┐
        │      H.264 DECODING OF         │──── S1004
        │   INTEGRATED MOVING IMAGE      │
        └───────────────────────────────┘
                        │
                        ▼
        ┌───────────────────────────────┐
        │       READING OF USER'S        │──── S1006
        │    INSTRUCTION OR SETTING      │
        └───────────────────────────────┘
                        │
                        ▼ S1008
                   ╱─────────╲        Yes
                  ╱ NORMAL    ╲──────────────────┐
                  ╲ DISPLAY?  ╱                   │ S1010
                   ╲─────────╱                    ▼
                        │ No          ┌───────────────────────┐
                        │             │ NORMAL VIEWING MOVING  │
                        │             │    IMAGE OUTPUT        │
                        ▼ S1012       └───────────────────────┘
                ╱───────────────╲                 │
               ╱  IS ADDITIONAL  ╲      No         │
              ╱ INFORMATION TYPE   ╲──────────┐    │
              ╲ STEREOSCOPIC      ╱           │    │
               ╲   VISION?       ╱            ▼ S1014
                ╲───────────────╱      ╱─────────────╲   Yes
                     │ Yes  S1020     ╱   NORMAL &    ╲──────┐
                     ▼          ╲    ╱ ADDITIONAL      ╲     │
        ┌───────────────────────┐   ╲ INFORMATION    ╱      │ S1018
        │ NORMAL/ADDITIONAL     │    ╲  DISPLAY?    ╱        ▼
        │ INFORMATION           │     ╲───────────╱  ┌─────────────────────────┐
        │ DISPLAY SELECTION     │          │ No      │ NORMAL VIEWING MOVING   │
        └───────────────────────┘          │         │ IMAGE & ADDITIONAL      │
                     │                      │         │ INFORMATION MOVING      │
                     ▼                      │         │ IMAGE OUTPUT            │
        ┌───────────────────────┐          ▼ S1016   └─────────────────────────┘
        │   SELECTED MOVING     │  ┌───────────────────────┐     │
        │    IMAGE OUTPUT       │  │ ADDITIONAL INFORMATION│     │
        └───────────────────────┘  │  MOVING IMAGE OUTPUT  │     │
                 │ S1022           └───────────────────────┘     │
                 │                           │                   │
                 ▼                           │                   │
              ( end )◄───────────────────────┴───────────────────┘
```

## INTERNATIONAL SEARCH REPORT

| | International application No. |
|---|---|
| | PCT/JP2010/068243 |

A. CLASSIFICATION OF SUBJECT MATTER
*H04N13/00(2006.01)i, H04N7/173(2006.01)i, H04N7/26(2006.01)i*

According to International Patent Classification (IPC) or to both national classification and IPC

B. FIELDS SEARCHED

Minimum documentation searched (classification system followed by classification symbols)
H04N13/00, H04N7/173, H04N7/26

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 03/092303 A1 (Sharp Corp.),<br>06 November 2003 (06.11.2003),<br>page 8, line 23 to page 11, line 9; page 18,<br>line 24 to page 22, line 5; fig. 22A, 22B<br>& US 2005/0248561 A1    & US 2005/0244050 A1<br>& EP 1501316 A1        & EP 1501317 A1 | 1-9 |
| A | JP 2005-223413 A (Sony Corp.),<br>18 August 2005 (18.08.2005),<br>entire text; all drawings<br>& US 2005/0200695 A1 | 1-9 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 October, 2010 (27.10.10) | 09 November, 2010 (09.11.10) |

| Name and mailing address of the ISA/<br>Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

**Patent documents cited in the description**

- JP 9138384 A
- JP 2000036969 A
- JP 2003045343 A